# EUROPÄISCHE PATENTSCHRIFT

(11) **EP 3 871 949 B1**
(45) Veröffentlichungstag und Bekanntmachung des Hinweises auf die Patenterteilung: **14.08.2024**
(21) Anmeldenummer: 20208701.1
(22) Anmeldetag: 19.11.2020
(51) Int. Cl.: B62B 17/08, B62B 15/00, B62B 13/14, B62B 17/00

(54) **BREMSBARER SCHLITTEN**
BRAKABLE SLEDGE
LUGE POUVANT ÊTRE FREINÉE

(30) Priorität: 06.12.2019 DE 202019106821 U
(43) Veröffentlichungstag der Anmeldung: 01.09.2021
(73) Patentinhaber: Graf Engineering & Co. KG, 39054 Klobenstein / Ritten (IT)
(72) Erfinder: Graf, Michael, 39054 KLOBENSTEIN / RITTEN (IT)
(74) Vertreter: Eisenführ Speiser

(56) Entgegenhaltungen:
- DE-C- 617 630
- DE-U1- 202013 008 478
- US-A- 1 299 338
- US-A- 336 274
- US-A- 441 167

## Beschreibung

Die Erfindung betrifft einen bremsbaren Schlitten nach dem Oberbegriff von Anspruch 1, mit einer Front und einem Heck, aufweisend eine erste Kufe und eine zweite Kufe, wobei die erste Kufe und die zweite Kufe eine Fahrtrichtung des Schlittens vorgeben und zum Gleiten auf einer Unterlage, bevorzugt Schnee, ausgebildet sind, einen Sitz für zumindest einen Fahrer, der zwischen der Front und dem Heck angeordnet ist, zumindest einen Rahmen, der den Sitz mit der ersten Kufe und der zweiten Kufe verbindet, eine Bremsvorrichtung zum Bremsen des Schlittens, die eine erste Bremseinheit und eine zweite Bremseinheit aufweist, wobei die erste Bremseinheit an der ersten Kufe und die zweite Bremseinheit an der zweiten Kufe angeordnet ist, eine Betätigungseinrichtung, die einen Griffabschnitt aufweist und zum selektiven und unabhängigen Betätigen der ersten Bremseinheit und der zweiten Bremseinheit ausgebildet ist, wobei die erste Bremseinheit und die zweite Bremseinheit durch das Betätigen in eine Bremsstellung einlegbar sind, in der die erste Bremseinheit und/oder die zweite Bremseinheit mit der Unterlage in Eingriff bringbar sind, und wobei die Betätigungseinrichtung zumindest abschnittsweise zwischen der Front und dem Sitz des Schlittens angeordnet ist, sodass der Fahrer den Griffabschnitt vor einer in Fahrtrichtung weisenden Seite seines Oberkörpers greifen und zum selektiven und unabhängigen Betätigen der ersten Bremseinheit und der zweiten Bremseinheit zu sich heranziehen kann, und eine Zugsicherung, die dazu ausgebildet ist, ein Einlegen der ersten Bremseinheit und/oder ein Einlegen der zweiten Bremseinheit zu verhindern, wenn die Betätigungseinrichtung in einer Zugstellung ist, wobei der Griffabschnitt in der Zugstellung auf einer distal zum Heck angeordneten Seite der Front angeordnet ist.

Schlitten, die häufig auch als Rodel oder Hornschlitten bezeichnet werden, sind in vielfältigen Ausführungsformen bekannt. Ursprünglich als Arbeitsgerät eingesetzt, werden Schlitten heute hautsächlich als Sportgerät verwendet. Zum Gleiten auf einer gleitfähigen Unterlage, wie insbesondere Schnee oder Eis, weisen Schlitten regelmäßig zwei im Wesentlichen parallel angeordnete Kufen auf, die eine Hauptfahrtrichtung des Schlittens vorgeben. Meist sind die Kufen mit einem oder mehreren Rahmen verbunden, auf denen ein Sitzbrett für einen Benutzer angebracht ist. In einem in Fahrrichtung weisenden Frontbereich weisen die Kufen oftmals bogenförmige Verlängerungen auf, die ein Eintauchen der Kufen in eine weiche Unterlage verhindern. Ferner weisen Schlitten meist ein Halteseil auf, das am Frontbereich des Schlittens, insbesondere an den bogenförmigen Verlängerungen, angebracht ist und als Halteeinrichtung für den Benutzer verwendet wird, welche die Gefahr eines Abrutschens des Fahrers während der Fahrt reduziert. Weiterhin kann das Halteseil zum Ziehen des Schlittens verwendet werden. Gesteuert werden bekannte Schlitten mittels Gewichtsverlagerung des Fahrers, wobei eine der beiden Kufen stärker belastet wird. Ferner kann der Fahrer mittels des Halteseils Steuerkräfte auf den Fronbereich des Schlittens aufbringen und den Schlitten in eine gewünschte Richtung lenken. Eine weitere Lenkmöglichkeit besteht darin, dass der Fahrer, insbesondere unter Verwendung seiner Füße, Druck auf die bogenförmigen Verlängerungen der Kufen aufbringt, um die Stellung der Kufen geringfügig zu verändern und den Schlitten zu steuern. Meist werden die drei genannten Steuermöglichkeiten kombiniert eingesetzt, wobei eine erzielbare Lenkwirkung insgesamt gering ist. Im Allgemeinen ist ein Steuern bekannter Schlitten jedoch nur mit großen Kurvenradien und/oder eingeschränkter Präzision möglich, woraus eine erhöhte Unfallgefahr und eine eingeschränkte Bedienbarkeit resultiert.

Viele bekannte Ausführungsformen von Schlitten weisen keine Bremseinrichtung auf. Das Bremsen derartiger Schlitten erfolgt durch den Nutzer, indem dieser seine Fersen mit der Unterlage in Eingriff bringt. Durch hierbei entstehende Reibungskräfte kann der Schlitten verlangsamt oder zum Stillstand gebracht werden. Insbesondere bei sehr kompakten Unterlagen, wie beispielsweise Eis, oder in sehr steilem Gelände ist eine erzielbare Bremswirkung jedoch häufig nicht ausreichend. Außerdem besteht hier eine nicht unerhebliche Verletzungsgefahr.

Um diesem Problem zu begegnen, wurden Schlitten entwickelt, die mit Bremseinrichtungen ausgestattet sind, welche in die gleitfähige Unterlage eingreifen und den Schlitten mittels Reibungskräften abbremsen. Oftmals sind die Bremseinrichtungen hierfür mit Krallen ausgestattet, die auch bei kompakten Unterlagen, wie insbesondere Eis, eine erhöhte Bremswirkung sicherstellen sollen. In vielen Fällen ist die Bremseinrichtung als Schwenkhebel ausgebildet, der um eine Schwenkachse schwenkbar ausgeführt ist. Zieht ein Benutzer einen Betätigungsabschnitt des Schwenkhebels zu sich heran, wird ein dem Betätigungsabschnitt gegenüberliegendes Ende des Schwenkhebels mit der gleitfähigen Unterlage in Kontakt gebracht. Ferner gibt es Varianten von Schlitten, deren Bremseinrichtungen mehrere solcher Schwenkhebel aufweisen.

EP 3 459 818 A1 offenbart eine Handbremse für einen Schlitten mit einem Handbremshebel, einer Drehachse, einer Bremskralle und zumindest einer starr mit dem Schlitten verbindbaren Lagerplatte, wobei der Handbremshebel mit der Drehachse und der Bremskralle verbunden ist und die Drehachse an der Lagerplatte drehbar gelagert ist. Die offenbarte Handbremse weist dabei zwei Bremskrallen und zwei Lagerplatten auf, wobei die beiden Bremskrallen mittels eines starren Handbremshebels verbunden sind. Beim Betätigen des Handbremshebels greifen beide Bremskrallen, die benachbart zu Kufen des Schlittens in den Lagerplatten gelagert sind, gleichzeitig in den Boden ein. Nachteilig ist hier, dass die erzeugten Bremskräfte symmetrisch auf den Schlitten wirken, wobei keine Lenkwirkung erzielt werden kann. Ferner muss ein Benutzer zum Betätigen des Handbremshebels zumindest eine Hand vom Halteseil lösen. Weiterhin erstreckt sich der Handbremshebel durch einen Sitzbereich des Schlittens, sodass der Fahrer beim Betätigen des Handbremshebels seinen Körperschwerpunkt in unvorteilhafter Weise verlagern muss.

DE 20 2013 008 478 U1 offenbart eine Bremsvorrichtung für einen Rodelschlitten, dadurch gekennzeichnet, dass die Bremsvorrichtung aus zwei Bremsbügeln besteht, die frei auf einer vorderen Querstange aufliegen und an ihrem oberen Ende mit einer lochförmigen Vorrichtung versehen sind, in welche eine Haltevorrichtung eingebracht werden kann und die mit ihrem unteren Ende bis hinter den mittleren Schlittensteg reichen und dort innen neben den Schlittenkufen enden. An der lochförmigen Vorrichtung, kann ein Seil angebracht werden, welches von einem Rodler während der Fahrt in der Hand gehalten wird und mittels welchem der Rodler die Bremsvorrichtung durch Heranziehen des Seils an den Körper aktiviert. Auch gemäß dieser Bremsvorrichtung greifen beide Bremsbügel zum Bremsen des Rodelschlittens beim Betätigen der Vorrichtung simultan in den Untergrund ein. Da das Seil, das von dem Fahrer während der Fahrt gehalten wird, mit der Bremsvorrichtung und nicht mit einem Frontbereich verbunden ist, ist ein Aufbringen von Steuerkräften auf einen Frontbereich des Schlittens mittels des Seils nicht möglich. Ferner ist der Drehpunkt der Bremsbügel unter dem Sitz angeordnet, sodass mit der Betätigung der Bremsvorrichtung eine negative Gewichtsverlagerung des Benutzers einhergeht.

Ein Schlitten gemäß EP 2 818 383 A1 umfasst einen Rahmen mit mindestens einem vorderen Bügel und einem hinteren Bügel, an welchem Kufen befestigt sind. Ferner ist eine Bremseinrichtung vorgesehen, die mindestens ein Bremselement umfasst, welches über eine Betätigungseinrichtung zum Bremsen des Schlittens gegen die Unterlage ausfahrbar ist. An beiden Kufen der offenbarten Vorrichtung ist jeweils eine Bremseinrichtung mit je einem Handgriff angeordnet, wobei die Bremseinrichtungen mittels der Handgriffe unabhängig voneinander betätigt werden können. Durch ein ungleichmäßiges Betätigen der Handgriffe, können die an den Kufen wirkenden Bremskräfte selektiv gesteuert und eine Lenkwirkung erreicht werden. Die Handgriffe sind dabei seitlich zu einem Sitz angeordnet, sodass ein Fahrer während der Fahrt eine aufrechte Sitzposition einnimmt. Durch die aufrechte Sitzposition liegt ein Körperschwerpunkt des Fahrers besonders hoch und relativ zum Schlitten in einem hinteren Bereich, woraus eine erhöhte Absturzgefahr resultiert. Da der Fahrer beide Hände zum Greifen der Handgriffe benötigt, hat dieser keine Möglichkeit ein Halteseil zu greifen. Dadurch wird die Gefahr eines Herunterfalles vom Schlitten erhöht und ein Steuern mittels des Halteseils ist nicht möglich.

US 336 274 A offenbart einen Schlitten mit über ein Zugseil ansteuerbaren Steuerarmen zum Bremsen des Schlittens. Zum Betätigen der Steuerarme wird das Zugseil durch Schlitze an Köpfen geführt, an denen die Steuerarme befestigt sind, während das Zugseil zum Ziehen des Schlittens aus den Schlitzen herausgenommen wird.

US 1 299 338 A offenbart einen Schlitten mit einer Bremse, die zwei Bremsglieder aufweist. Die Bremsglieder sind mittels eines Seils betätigbar, wobei auf das Seil aufgebrachte Kräfte durch einen Schwenkhebel und einen Stab auf die Bremsglieder übertragen werden. Aufgabe der vorliegenden Erfindung ist, einen bremsbaren Schlitten bereitzustellen, der ein sicheres Bremsen und eine gegenüber dem Stand der Technik verbesserte Handhabung ermöglicht.

Die Erfindung gemäß Anspruch 1 löst die vorliegende Aufgabe dadurch, dass die Betätigungseinrichtung zumindest einen ersten Anschlag aufweist, welcher dazu ausgebildet ist, mit einem korrespondierenden ersten Gegenstück der Zugsicherung zusammenzuwirken und das Einlegen der ersten Bremseinheit und/oder zweiten Bremseinheit zu verhindern, wenn die Betätigungseinrichtung in der Zugstellung ist. Die Betätigungseinrichtung kann also zum Ziehen des Schlittens und zum Betätigen der Bremsvorrichtung verwendet werden.

Beim Ziehen des Schlittens durch einen Benutzer, geht der Benutzer vorweg und zieht den Schlitten an dem Griffabschnitt der Betätigungseinrichtung hinter sich her. Dies ist insbesondere in der Ebene hilfreich oder wenn der Schlitten vor einer Fahrt einen Anstieg hinaufgezogen werden muss. Hierbei wäre es nachteilig, wenn durch ein Ziehen an der Betätigungseinrichtung in Fahrtrichtung des Schlittens die erste Bremseinheit oder die zweite Bremseinheit betätigt würden. Dies kann durch die Zugsicherung in vorteilhafter Weise vermieden werden. Fehlbenutzungen, die vorkommen, wenn neben einer Betätigungseinrichtung fürdie Bremse eine gesonderte Zugeinrichtung vorgesehen ist, werden verhindert. Ein Nutzer kann beispielsweise ein Zugseil, welches zum Ziehen des Schlittens verwendet wird, nicht mit einer Betätigungseinrichtung verwechseln und aus einer solchen Verwechslung resultierende Unfälle werden verhindert.

Das Gegenstück der Zugsicherung ist bevorzugt dazu ausgebildet, ein Eingreifen des Anschlags zu ermöglichen, wenn die Betätigungseinrichtung von der Front des Schlittens nach vorne hervorsteht. Wenn ein Benutzer den Schlitten hinter sich herzieht, liegt der Anschlag an dem Gegenstück an und ein Betätigen der Betätigungseinrichtung bzw. ein Einlegen der ersten und zweiten Bremseinheit wird verhindert.

Die Front des Schlittens weist in Richtung der durch die Kufen vorgegebenen Fahrtrichtung des Schlittens. Weitere Abschnitte der Betätigungseinrichtung können auch in anderen Bereichen des Schlittens, wie beispielsweise unter dem Sitz oder zwischen dem Sitz und dem Heck, angeordnet sein. Besonders bevorzugt ist der Griffabschnitt in einer unbetätigten Stellung zwischen der Front und dem Sitz angeordnet und in einer betätigten Stellung auf einer den Kufen gegenüberliegenden Seite des Sitzes, also über dem Sitz, angeordnet. Ebenso bevorzugt kann auch vorgesehen sein, dass der Griffabschnitt teilweise über dem Sitz und teilweise zwischen der Front und dem Sitz angeordnet ist. Die Betrachtung, ob ein Abschnitt der Betätigungseinrichtung zwischen der Front und dem Sitz angeordnet ist, erfolgt entlang einer zur Fahrtrichtung des Schlittens parallelen Richtung. Dabei kann eine Lage des Betätigungsabschnitts quer zur Fahrtrichtung des Schlittens variieren. Bevorzugt ist der Abschnitt der Betätigungseinrichtung, der zwischen dem Sitz und der Front angeordnet ist, in einer Sitzebene und/oder über der Sitzebene angeordnet.

Durch ein zumindest abschnittsweises Anordnen der Betätigungseinrichtung zwischen dem Sitz und der Front des Schlittens wird sichergestellt, dass der Fahrer die Betätigungseinrichtung stets in Fahrtrichtung vor seinem Oberkörper greifen kann. Dabei kann der Fahrer seine Arme während der Fahrt in Fahrtrichtung nach vorne strecken, wodurch es dem Fahrer ermöglicht wird, seine Arme zum ausbalancieren seines Körperschwerpunktes zu nutzen. Während der Fahrt greift der Fahrer den Griffabschnitt vor seinem Oberkörper, wobei der Griffabschnitt vorzugsweise über dem Sitz oder zwischen dem Sitz und der Front angeordnet ist. Zum Betätigen der Betätigungseinrichtung zieht der Fahrer den Griffabschnitt zu sich heran, wobei der Griffabschnitt beim Betätigen in seiner Lage verändert wird und im betätigten Zustand zwischen der Front und dem Sitz, teilweise zwischen der Front und dem Sitz und teilweise über dem Sitz, oder vollständig über dem Sitz angeordnet sein kann. Hierdurch wird eine zurückgelehnte Körperhaltung erreicht, wodurch die Sicherheit während der Fahrt gesteigert werden kann. Dabei senkt die zurückgelehnte Körperhaltung den Körperschwerpunkt des Fahrers, und somit auch den Schwerpunkt des aus dem Fahrer und dem Schlitten gebildeten Gesamtsystems, ab und verringert die Gefahr eines Kippens des Schlittens. Zudem kann der Fahrer durch Verlagerung seines Körperschwerpunkts auf Längs- und Querbeschleunigungen des Schlittens reagieren und diese Beschleunigungen ausgleichen.

Durch das Betätigen der Betätigungseinheit werden die erste Bremseinheit und die zweite Bremseinheit in die Bremsstellung eingelegt, wobei in der Bremsstellung vorzugsweise an wenigstens einer der Kufen des Schlittens eine Bremskraft bereitgestellt wird. In der Bremsstellung sind die erste Bremseinheit und die zweite Bremseinheit derart angeordnet, dass diese mit der Unterlage in Eingriff bringbar sind, um eine Bremskraft auf die jeweilige Kufe aufzubringen. Dabei können die erste Bremseinheit und die zweite Bremseinheit selektiv und unabhängig voneinander in die Bremsstellung eingelegt werden. So kann beispielsweise die erste Bremseinheit in der Bremsstellung eingelegt sein, während die zweite Bremseinheit in einer Fahrstellung ist, wobei in der Fahrstellung keine Bremskraft bereitgestellt wird. In der Bremsstellung sind die erste Bremseinheit und/oder die zweite Bremseinheit derart angeordnet, dass diese mit der Unterlage in Eingriff sind, wenn die Kufen auf einer ebenen und zu den Kufen parallelen Unterlage aufliegen. Es soll verstanden werden, dass ein tatsächliches Vorliegen eines Eingriffs der ersten Bremseinheit und/oder zweiten Bremseinheit von der jeweiligen Struktur der Unterlage abhängt. Beispielsweise kann die Unterlage Mulden oder Erhebungen aufweisen, sodass ein Eingriff der ersten und/oder zweiten Bremseinheit mit der Unterlage nicht während der gesamten Fahrt sichergestellt sein muss obwohl die erste Bremseinheit und/oder die zweite Bremseinheit in die Bremsstellung eingelegt ist.

Das selektive und unabhängige Betätigen der Bremseinheiten ermöglicht es, an den Kufen voneinander verschiedene Bremskräfte bereitzustellen. Die Kufen des Schlittens werden dann unterschiedlich stark verzögert, woraus eine Gierbewegung des Schlittens resultiert. Durch selektives und unabhängiges Ansteuern der Bremseinheiten kann der Schlitten zuverlässig und präzise gesteuert werden kann. Es soll verstanden werden, dass dabei auch nur eine der Bremseinheiten mittels der Betätigungseinrichtung betätigt werden kann, während die andere Bremseinheit nicht betätigt wird. Ferner ist bei entsprechender Betätigung durch den Fahrer auch eine gleichmäßige Bremsung des Schlittens möglich, wobei an der ersten Kufe und an der zweiten Kufe im Wesentlichen identische Bremskräfte bereitgestellt werden. Hierdurch kann beispielsweise eine Geradeausfahrt des Schlittens während der Verzögerung bis zum Stillstand erreicht werden. Besonders bevorzugt weist die Betätigungseinrichtung eine gemeinsame Betätigungseinheit zum Betätigen der ersten Bremseinheit und der zweiten Bremseinheit auf. Es soll jedoch verstanden werden, dass die erste und zweite Bremseinheiten auch selektiv betätigbar sind, wenn diese eine gemeinsame Betätigungseinrichtung aufweisen. Vorzugsweise ist der Griffabschnitt zwischen dem Sitz und der Front des Schlittens angeordnet.

In einer ersten bevorzugten Ausführungsform weist die Betätigungseinrichtung zumindest ein Bremsseil auf, wobei die erste Bremseinheit und/oder die zweite Bremseinheit durch Ziehen des Bremsseils in die Bremsstellung einlegbar sind. Das Ziehen des Bremsseils stellt dabei vorzugsweise das Betätigen der Betätigungseinrichtung dar. Bevorzugt kann das Bremsseil zum Einlegen der ersten Bremseinheit und/oder zweiten Bremseinheit in eine beliebige Raumrichtung gezogen werden. Es kann jedoch auch vorgesehen sein, dass die erste Bremseinheit und/oder die zweite Bremseinheit nur durch zumindest abschnittsweises Ziehen des Bremsseils entgegen der Fahrtrichtung einlegbar sind.

Ein Bremsseil ermöglicht dabei eine besonders einfache und kostengünstige Betätigung der ersten und zweiten Bremseinheiten. Vorzugsweise ist das Bremsseil ein Drahtseil, ein Kabel, ein Kunststoffseil oder ein Seil, das aus einem Naturmaterial gefertigt ist. Bevorzugt ist der Griffabschnitt als eine Ummantelung des Bremsseils ausgeführt. Dabei kann bevorzugt auch nur ein Teil des Bremsseils ummantelt sein. Vorzugsweise ist die Ummantelung eine Kunststoffummantelung. Da Bremsseile im Vergleich zu starren Betätigungseinrichtungen, wie etwa Hebel oder dergleichen, flexibel sind, wird eine Verletzungsgefahr im Falle eines Unfalls reduziert. Ferner erlaubt ein Bremsseil das Übertragen von Bremsvorgaben des Fahrers auf die Bremseinheiten aus verschiedenen Richtungen. Beispielsweise kann ein Bremsseil teilweise quer zur Fahrtrichtung mitbewegt werden, wenn ein Fahrer sein Gewicht verlagert oder sein Arme, welche das Bremsseil greifen, zum ausbalancieren nutzt.

Vorzugsweise weist das Bremsseil einen ersten Seilabschnitt und einen zweiten Seilabschnitt auf, wobei der erste Seilabschnitt zum Einlegen der ersten Bremseinheit in die Bremsstellung und der zweite Seilabschnitt zum Einlegen der zweiten Bremseinheit in die Bremsstellung vorgesehen ist, wobei der erste Seilabschnitt und der zweite Seilabschnitt unabhängig voneinander betätigbar sind. Vorzugsweise sind der erste Seilabschnitt und der zweite Seilabschnitt miteinander verbunden. Es kann jedoch auch vorgesehen sein, dass der erste Seilabschnitt und der zweite Seilabschnitt als separate Seile ausgeführt sind, wobei das Bremsseil das System aus dem ersten Seilabschnitt und dem zweiten Seilabschnitt ist. Besonders bevorzugt sind der erste Seilabschnitt und der zweite Seilabschnitt mittels des Griffabschnitts verbunden. Der erste Seilabschnitt erstreckt sich vorzugsweise vom Griffabschnitt zur ersten Bremseinheit und der zweite Seilabschnitt erstreckt sich bevorzugt vom Griffabschnitt zur zweiten Bremseinheit. Besonders bevorzugt ist das erste Bremsseil einstückig ausgebildet. Es kann vorgesehene sein, dass der erste Seilabschnitt mit einem ersten Ende des Griffabschnitts verbunden ist und der zweite Seilabschnitt mit einem zweiten Ende des Griffabschnitts verbunden ist. Es kann jedoch ebenso vorgesehen sein, dass sich der erste Seilabschnitt und/oder der zweite Seilabschnitt zumindest abschnittsweise in und/oder durch den Griffabschnitt erstrecken.

Gemäß einer bevorzugten Ausführungsform weist die Betätigungseinrichtung ferner eine Umlenkeinrichtung auf, die in einem Frontbereich des Schlittens angeordnet ist, der sich zwischen der Front und dem Sitz erstreckt. Der Frontbereich ist in Fahrtrichtung vor dem Sitz und hinter der Front angeordnet, sodass bei einer Geradeausfahrt des Schlittens ein Punkt entlang einer Bewegungsbahn zunächst von der Front, dann von dem Frontbereich und anschließend von dem Sitz erreicht wird. Durch die Verwendung einer Umlenkeinrichtung ist es möglich, die erste Bremseinheit und/oder die zweite Bremseinheit an beliebigen Positionen entlang einer Längsachse der Kufen anzuordnen. Beispielsweise können die Bremseinheiten unterhalb des Sitzes oder in einem Heckbereich des Schlittens angeordnet sein, während ein Betätigen der Bremseinheiten mittels des zwischen Sitz und Front angeordneten Griffabschnitts möglich ist. Die Wahl der Position der Bremseinheiten beeinflusst dabei eine Stabilität des Schlittens während des Bremsens.

Gemäß einer bevorzugten Ausführungsform weist die Umlenkeinrichtung eine erste Umlenkung und eine zweite Umlenkung auf, wobei die erste Umlenkung an einer ersten Verlängerung der ersten Kufe angeordnet ist und die zweite Umlenkung an einer zweiten Verlängerung der zweiten Kufe angeordnet ist. Die Verlängerungen erstrecken sich vorzugsweise von einem bodenparallelen Abschnitt der Kufen in Fahrtrichtung nach vorne und von der Unterlage weg. Besonders bevorzugt sind die Verlängerungen bogenförmig ausgebildet. Es soll verstanden werden, dass die Verlängerungen auch als gerade Verlängerungen ausgebildet sein können. Dabei ist zwischen den bodenparallelen Abschnitt der Kufen und den geraden Verlängerungen ein Knick ausgebildet. Vorzugsweise ist die erste Umlenkung in einem ersten Endabschnitt der ersten Verlängerungen und/oder die zweite Verlängerung in einem zweiten Endabschnitt der zweiten Verlängerung angeordnet. Die Endabschnitte sind dabei diejenigen Abschnitte der Verlängerungen, welche den größten Abstand zum bodenparallelen Abschnitt der Kufen haben. Vorzugsweise sind die erste und die zweite Umlenkung im Wesentlichen auf einer Höhe einer Sitzebene angeordnet, die durch den Sitz definiert wird. Die Betätigungseinrichtung erstreckt sich dann vorzugsweise zwischen dem Griffabschnitt und der Umlenkeinrichtung im Wesentlichen parallel zu einer Auflageebene des Schlittens. Ferner bevorzugt erstreckt sich die Betätigungseinrichtung zwischen dem Griffabschnitt und der Umlenkeinrichtung mit einem Winkel, ausgewählt aus einem Bereich von 0° bis 60°, bevorzugt 0° bis 40°, ferner bevorzugt 5° bis 40°, besonders bevorzugt 5° bis 25°, wobei ein Winkel von 0° einer Erstreckung der Umlenkeinrichtung parallel zur Auflageebene entspricht. Bevorzugt kann die Umlenkeinrichtung auch weitere Umlenkungen aufweisen, die entlang von Längsachsen der Kufen angeordnet sind. Dies kann beispielsweise bevorzugt sein, um eine Führung der Betätigungseinrichtung zu verbessern.

In einer bevorzugten Ausführungsform ist die erste Umlenkung als Umlenkrolle für den ersten Seilabschnitt und die zweite Umlenkung als Umlenkrolle für den zweiten Seilabschnitt ausgebildet. Umlenkrollen ermöglichen eine im Wesentlichen reibungs- und/oder verschleißfreie Führung des Bremsseils. Vorzugsweise weist die erste Umlenkrolle und/oder die zweite Umlenkrolle eine Führungsrolle zum Führen des Seils und ein Umlenkgehäuse auf. Die Umlenkrollen sind bevorzugt dazu ausgebildet, ein Herausspringen des Bremsseils aus den Führungsrollen zu verhindern. Hierfür können die Führungsrollen bevorzugt eine im Wesentlichen U-förmige Führungsfläche aufweisen. Weiterhin bevorzugt können die Führungsrollen auch als geschlossene Rollen ausgebildet sein, wobei die Führungsrolle und das Umlenkgehäuse dann vorzugsweise einen umschlossenen Führungskanal definieren.

In einer bevorzugten Variante ist der erste Seilabschnitt zumindest abschnittsweise entlang der ersten Verlängerung in einer ersten Hülle aufgenommen und der zweite Seilabschnitt zumindest abschnittsweise entlang der zweiten Verlängerung in einer zweiten Hülle aufgenommen, wobei die erste Hülle und die zweite Hülle entlang ihrer Längsrichtungen im Wesentlichen druckfest sind. Die Hüllen erlauben ein Führen des Bremsseils entlang der Verlängerung. Die Druckfestigkeit der Hüllen ermöglicht wenigstens teilweise ein Übertragen von Druckkräften durch das Bremsseil. So kann beispielsweise eine Rückstellkraft einer Bremseinheit auf das Bremsseil übertragen werden, ohne dass das Bremsseil ausbeult. Vorzugsweise bilden das Bremsseil und die Hülle einen Bowdenzug. Es soll verstanden werden, dass das Bremsseil auch entlang einer gesamten Länge der Kufen in einer Hülle aufgenommen sein können. Vorzugsweise sind die Hüllen an den jeweiligen Enden mit gedichteten Endkappen versehen, die eine Bewegung des Bremsseils erlauben und das Eintreten von Fremdstoffen, wie insbesondere Wasser und Schmutz, in die Hülle verhindern.

In einer Variante weist das erste Gegenstück eine Öffnung auf, die dazu ausgebildet ist, die Betätigungseinrichtung aufzunehmen, wenn die Betätigungseinrichtung in der Zugstellung ist, wobei der erste Anschlag größer ist als eine lichte Weite der Öffnung. Vorzugsweise wird die Betätigungseinrichtung beim Ziehen des Schlittens durch die Öffnung geführt. Dabei ist die Öffnung vorzugsweise dazu ausgebildet, eine Bewegung der Betätigungseinrichtung entlang einer Zentralachse der Öffnung, also durch die Öffnung hindurch, zu erlauben. Da der Anschlag größer ist als die lichte Weite der Öffnung ist ein Hindurchtreten des Anschlags durch die Öffnung nicht möglich, wodurch auch die Bewegung der Betätigungseinrichtung entlang der Zentralachse der Öffnung limitiert wird. Somit kann ein Betätigen der Bremseinheiten vermieden werden. Vorzugsweise ist die Öffnung als Schlitz ausgebildet. Ein Schlitz ermöglicht dabei ein einfaches Durchführen der Betätigungseinrichtung durch die Öffnung. Wenn die Betätigungseinrichtung ein Bremsseil aufweist, ist der Anschlag vorzugsweise als Verdickung des Bremsseils oder als an dem Bremsseil angebrachte Verdickung ausgebildet sein. Beispielsweise kann der Anschlag als Quetschhülse ausgeführt sein, die über das Bremsseil geführt durch Zusammendrücken in der gewünschten Position fixiert wird. Es kann auch vorgesehen sein, dass der erste Anschlag als Verdickung des Bremsseils und/oder an dem Bremsseil angebrachtes Klemmelement ausgebildet ist.

In einer bevorzugten Ausführungsform weist die Betätigungseinrichtung einen zweiten Anschlag und die Zugsicherung ein erstes Gegenstück und ein zweites Gegenstück auf, wobei das erste Gegenstück an der ersten Umlenkung und das zweite Gegenstück an der zweiten Umlenkung angeordnet ist. Vorzugsweise greift der erste Anschlag beim Ziehen des Schlittens in Fahrtrichtung in das erste Gegenstück ein und der zweite Anschlag greift beim Ziehen des Schlittens in Fahrtrichtung in das zweite Gegenstück ein. Dabei sind die Gegenstücke vorzugsweise integral an den jeweiligen Umlenkrollen angeformt. Durch ein integral mit den Umlenkrollen geformtes Gegenstück kann in vorteilhafter Weise eine Montage der Zugsicherung erleichtert werden. Es kann jedoch auch vorgesehen sein, dass die Zugsicherung nur ein Gegenstück aufweist, das bevorzugt zwischen den Umlenkrollen angeordnet ist.

Vorzugsweise weist die Betätigungseinrichtung ferner eine Sicherheitsbremse auf, welche die erste Bremseinheit und/oder die zweite Bremseinheit in die Bremsstellung vorspannt und dazu ausgebildet ist, in Antwort auf ein Betätigen der Sicherheitsbremse durch den Fahrer die erste Bremseinheit und/oder die zweite Bremseinheit freizugeben. Es soll verstanden werden, dass eine von der Sicherheitsbremse aufgebrachte Vorspannkraft größer ist, als eine korrespondierende Rückstellkraft der Rückstelleinrichtung. Wenn mehrere Rückstelleinrichtungen vorgesehen sind, ist die Vorspannkraft bevorzugt größer als eine Summe der Rückstellkräfte der Rückstelleinrichtungen. Wird die Sicherheitsbremse nicht betätigt, werden die Bremseinheiten des Schlittens durch die Sicherheitsbremse mittels der Betätigungseinrichtung eingelegt und der Schlitten gebremst. Betätigt nun ein Nutzer die Sicherheitsbremse, wird die Vorspannung der Sicherheitsbremse gelöst und die Bremseinheiten können in die Fahrposition gebracht werden. Es soll verstanden werden, dass der Schlitten auch bei betätigter Sicherheitsbremse weiterhin durch Betätigen der Betätigungseinrichtung gebremst werden kann. Ebenso ist es möglich den Schlitten während der Fahrt durch ein Loslassen der Sicherheitsbremse zu bremsen. Lässt der Fahrer während der Fahrt die Sicherheitsbremse los bzw. wird diese nicht weiter betätigt, wird der Schlitten automatisch mittels zumindest einer der Bremseinheiten gebremst. Dies ist insbesondere Vorteilhaft, um einen Kontrollverlust zu vermeiden, wenn ein Fahrer die Betätigungseinrichtung versehentlich loslässt. Ferner kann vermieden werden, dass der Schlitten weiterfährt, wenn ein Fahrer vom Schlitten fällt.

Vorzugsweise weist die Sicherheitsbremse einen Federspeicher, einen ersten Sicherheitsgriff und einen zweiten Sicherheitsgriff auf, wobei der Federspeicher die Betätigungseinrichtung zum Einlegen der ersten Bremseinheit und/oder zweiten Bremseinheit betätigt, wenn der erste Sicherheitsgriff und der zweite Sicherheitsgriff in einem Sicherheitsbremszustand sind, indem der erste Sicherheitsgriff und der zweite Sicherheitsgriff zueinander beanstandet sind. Zum Freigeben der Sicherheitsbremse werden der erste Sicherheitsgriff und der zweite Sicherheitsgriff in Kontakt gebracht. Der erste Sicherheitsgriff und der zweite Sicherheitsgriff können auch abschnittsweise, beispielsweise nach Art einer Schere, miteinander verbunden sein. In einer geöffneten Position dieser Schere sind der erste und der zweite Sicherheitsgriff dann voneinander beabstandet. In einer geschossenen Position dieser Schere sind der erste und der zweite Sicherheitsgriff in Kontakt. Vorzugsweise ist der zweite Sicherheitsgriff dazu ausgebildet, zumindest abschnittsweise in den ersten Sicherheitsgriff einzugreifen. Bevorzugt weist der erste Sicherheitsgriff einen im Wesentlichen U-förmigen Querschnitt und der zweite Sicherheitsgriff einen im Wesentlichen zylindrischen Querschnitt auf, wobei eine lichte Weite des U-förmigen Querschnitts größer ist als ein Außendurchmesser des zylindrischen Querschnitts. Der Federspeicher weist dabei bevorzugt eine Spiralfeder auf. Es kann jedoch auch vorgesehen sein, dass der Federspeicher eine Drehfeder, ein hydraulisches Federelement und/oder ein pneumatisches Federelement aufweist.

Ferner ist bevorzugt, dass die erste Bremseinheit eine erste Rückstelleinrichtung aufweist, die zum Verbringen der ersten Bremseinheit in eine Fahrstellung ausgebildet ist, und dass die zweite Bremseinheit eine zweite Rückstelleinrichtung aufweist, die zum Verbringen der zweiten Bremseinheit in eine Fahrstellung ausgebildet ist, wobei die erste Bremseinheit und/oder die zweite Bremseinheit in der Fahrstellung nicht mit der Unterlage im Eingriff sind. Es soll verstanden werden, dass die erste Bremseinheit und die zweite Bremseinheit selektiv und unabhängig voneinander in die Fahrstellung verbracht werden können. Beispielsweise kann die erste Bremseinheit in die Bremsstellung eingelegt sein, während die zweite Bremseinheit in der Fahrstellung verbracht ist. In Fahrstellung greifen die erste Bremseinheit und/oder die zweite Bremseinheit nicht in die Unterlage ein, wenn die Unterlage eben und parallel zu den Kufen ist. Jedoch können die Bremseinheiten im Falle unebener Unterlagen auch in der Fahrstellung mit der Unterlage im Eingriff sein. Beispielsweise ist dies möglich, wenn die Unterlage Spurrillen aufweist, in denen die Kufen des Schlittens laufen.

Die Rückstelleinrichtungen ermöglichen ein Verbringen der Bremseinheiten in eine neutrale Position, in der keine Bremswirkung durch die Bremseinheiten erzeugt wird, wenn die Bremseinheiten nicht mittels der Betätigungseinrichtung durch den Fahrer betätigt werden. Beispielsweise kann der Fahrer ein Bremsseil freigeben, sodass die Bremseinheiten nicht mehr in die Unterlage eingreifen. Vorzugsweise ist die ersten Rückstelleinrichtung und/oder die zweite Rückstelleinrichtung dazu ausgebildet, die Betätigungseinrichtung in eine neutrale Position zu verbringen. Bevorzugt ist die erste Rückstelleinrichtung und/oder die zweite Rückstelleinrichtung als Spanneinrichtung, besonders bevorzugt als Feder, ausgebildet, die dazu angepasst ist, die erste Bremseinrichtung und/oder die zweite Bremseinrichtung in die Fahrposition vorzuspannen, wobei in der Fahrposition keine Bremswirkung durch die erste Bremseinheit und/oder die zweite Bremseinheit erzeugt wird. Somit kann ein unbeabsichtigtes Einlegen der Bremseinheiten, beispielsweise aufgrund von Erschütterungen, vermieden werden. Zum Betätigen der Bremseinheiten muss der Fahrer dann zunächst eine Rückstellkraft der Rückstelleinrichtungen überwinden. Durch die auf die Betätigungseinrichtung übertragene Rückstellkraft erhält der Fahrer zudem bereits vor dem Eingreifen der Bremseinheiten in die Unterlage eine als angenehm empfundene Kraftrückmeldung.

Vorzugsweise weist die erste Bremseinheit einen ersten Klappmechanismus mit einem ersten Schwenkhebel und einem ersten Betätigungshebel auf, wobei der erste Betätigungshebel an einem ersten Ende drehbar mit einem zweiten Ende des ersten Schwenkhebels verbunden ist und wobei ein zweites Ende des ersten Betätigungshebels mit der Betätigungseinrichtung verbunden ist. Zusätzlich oder alternativ weist die die zweite Bremseinheit einen zweiten Klappmechanismus mit einem zweiten Schwenkhebel und einem zweiten Betätigungshebel auf, wobei der zweite Betätigungshebel an einem ersten Ende drehbar mit einem zweiten Ende des zweiten Schwenkhebels verbunden ist und wobei ein zweites Ende des zweiten Betätigungshebels mit der Betätigungseinrichtung verbunden ist. Die Kombination aus einem Schwenkhebel und einem Betätigungshebel verhindert vorzugsweise ein Verhaken der Betätigungseinrichtung mit der Bremseinheit. Dies ist insbesondere wünschenswert, wenn die Betätigungseinrichtung ein Bremsseil aufweist. Ferner wird durch die Verwendung starrer Hebel eine optimale Kraftübertragung sichergestellt. Eine Drehachse zwischen dem ersten Betätigungshebel und dem ersten Schwenkhebel ist dabei bevorzugt quer zur Fahrtrichtung und parallel zur Auflageebene des Schlittens ausgerichtet. In analoger Weise kann auch eine zweite Drehachse zwischen dem zweiten Betätigungshebel und dem zweiten Schwenkhebel quer zur Fahrtrichtung und parallel zur Auflageebene ausgerichtet sein. Vorzugsweise ist ein erstes Ende des ersten Schwenkhebels mit der ersten Rückstelleinrichtung verbunden. Ebenso bevorzugt ist ein erstes Ende des zweiten Schwenkhebels mit der zweiten Rückstelleinrichtung verbunden.

Gemäß einer bevorzugten Ausführungsform weist die erste Bremseinheit eine erste Kralle auf, die zum Eingreifen in die Unterlage über das zweite Ende des ersten Schwenkhebels hervorstehend ausgebildet ist Vorzugsweise weist auch die zweite Bremseinheit eine zweite Kralle auf, die zum Eingreifen in die Unterlage über das zweite Ende des zweiten Schwenkhebels hervorstehend ausgebildet ist. Es soll verstanden werden, dass die erste Bremseinheit und/oder die zweite Bremseinheit auch zwei oder mehr Krallen aufweisen können. Ebenso bevorzugt können die erste Kralle und/oder die zweite Kralle mehrere Spitzen aufweisen. Ferner kann auch vorgesehen sein, dass die Krallen und/oder die Spitzen einer Bremseinheit unterschiedlich weit von dem Betätigungshebel hervorstehen.

Vorzugsweise sind die erste Kralle und/oder die zweite Kralle in einer initialen Bremsstellung im Wesentlichen senkrecht zu einer Auflageebene des Schlittens, die durch die erste Kufe und die zweite Kufe des Schlittens definiert wird, wobei eine Spitze der ersten Kralle und/oder eine Spitze der zweiten Kralle in der initialen Bremsstellung die Auflageebene kontaktiert. In der Bremsstellung ist die erste Bremseinheit und/oder die zweite Bremseinheit mit der Unterlage in Kontakt, wobei die Spitze der ersten Kralle und/oder die Spitze der zweiten Kralle die Auflageebene nicht durchdringt. Es soll verstanden werden, dass der Bremsvorgang in der initialen Bremsstellung eingeleitet wird. Ebenso kann vorgesehen sein, dass die erste Kralle und/oder die zweite Kralle in der initialen Bremsstellung mit der Auflageebene einen Bremswinkel einschließt. Der Bremswinkel, gemessen zwischen der Auflageebene und einer Längsachse der ersten und/oder zweiten Kralle, wobei der Winkel in Richtung der Front des Schlittens geöffnet ist, weist bevorzugt einen Bereich von 20° bis 150°, ferner bevorzugt 45° bis 135°, ferner bevorzugt 45° bis 120°, besonders bevorzugt 45° bis 90° auf.

Gemäß einer bevorzugten Ausführungsform weist die erste Kralle mehrere Spitzen auf, die entlang einer ersten Schwenkachse der ersten Bremseinheit zueinander versetzt angeordnet sind und/oder weist die zweite Kralle mehrere Spitzen auf, die entlang einer zweiten Schwenkachse der zweiten Bremseinheit zueinander versetzt angeordnet sind. Vorzugsweise weisen die Spitzen der ersten Kralle und/oder die Spitzen der zweiten Kralle voneinander verschiedene Spitzenlängen, gemessen quer zur jeweiligen Schwenkachse der Bremseinheit, auf. Bevorzugt weist eine Kufenspitze die größte Spitzenlänge der Spitzen der Kralle auf. Die Kufenspitze ist diejenige Spitze, die der Kufe am nächsten liegt. Besonders bevorzugt nimmt die Spitzenlänge der Spitzen entlang der Schwenkachse ausgehend von der Kufe hin zu einer Mitte des Schlittens kontinuierlich ab. Vorzugsweise ist die Spitzenlänge der Spitzen dazu angepasst, der Sturz der Kufen auszugleichen. Der Sturz beschreibt eine Neigung der Kufen des Schlittens hin zur Mitte des Schlittens. Bevorzugt weist der Sturz der Kufen einen Wert in einem Bereich von größer 0° bis 35°, größer 0° bis 30°, 5° bis 30°, 10° bis 30°, 10° bis 25°, besonders bevorzugt 15° bis 25° auf, wobei auch die Endwerte der Bereich bevorzugt sind. Der Sturz der Kufen wird dann durch die Spitzen ausgeglichen, wenn beim Betätigen der Bremse alle Spitzen zeitgleich in eine ebene gleitfähige Unterlage eingreifen. Es soll verstanden werden, dass im Anwendungsfall auch nur einzelne Spitzen in die gleitfähige Unterlage eingreifen können, wenn die gleitfähige Unterlage nicht eben ist bzw. Vorsprünge und Vertiefungen aufweist.

In einer bevorzugten Variante ist die erste Bremseinheit an einem hinteren Abschnitt der ersten Kufe und die zweite Bremseinheit an einem hinteren Abschnitt der zweiten Kufe angeordnet, wobei sich die hinteren Abschnitte der Kufen von einem Heck des Schlittens bis zum Frontabschnitt des Schlittens erstrecken. Vorzugsweise sind die erste Bremseinheit und die zweite Bremseinheit in einem Bereich von 0% bis 70%, bevorzugt von 10% bis 60%, bevorzugt von 20% bis 60%, besonders bevorzugt 20 % bis 50%, der Länge des Schlittens, gemessen zwischen einem Heck des Schlittens und der Front, angeordnet. Eine Lage der Bremseinheiten beeinflusst dabei das Bremsverhalten des Schlittens. Vorzugsweise sind die erste Bremseinheit und die zweite Bremseinheit unter dem Sitz angeordnet.

Ferner wird ein bremsbarer Schlitten mit einer Front und einem Heck offenbart, aufweisend eine erste Kufe und eine zweite Kufe, wobei die erste Kufe und die zweite Kufe eine Fahrtrichtung des Schlittens vorgeben und zum Gleiten auf einer Unterlage, bevorzugt Schnee, ausgebildet sind, einen Sitz für zumindest einen Fahrer, der zwischen der Front und dem Heck angeordnet ist, zumindest einen Rahmen, der den Sitz mit der ersten Kufe und der zweiten Kufe verbindet, eine Bremsvorrichtung zum Bremsen des Schlittens, die eine erste Bremseinheit und eine zweite Bremseinheit aufweist, wobei die erste Bremseinheit an der ersten Kufe und die zweite Bremseinheit an der zweiten Kufe angeordnet ist und eine Betätigungseinrichtung, die einen Griffabschnitt aufweist und zum selektiven und unabhängigen Betätigen der ersten Bremseinheit und der zweiten Bremseinheit ausgebildet ist, wobei die erste Bremseinheit und die zweite Bremseinheit durch das Betätigen in eine Bremsstellung einlegbar sind, in der die erste Bremseinheit und/oder die zweite Bremseinheit mit der Unterlage in Eingriff bringbar sind, wobei die Betätigungseinrichtung zumindest abschnittsweise zwischen der Front und dem Sitz des Schlittens angeordnet ist, sodass der Fahrer den Griffabschnitt vor einer in Fahrtrichtung weisenden Seite seines Oberkörpers greifen und zum selektiven und unabhängigen Betätigen der ersten Bremseinheit und der zweiten Bremseinheit zu sich heranziehen kann, dadurch gekennzeichnet, dass die Betätigungseinrichtung ferner eine Sicherheitsbremse aufweist, welche die erste Bremseinheit und/oder die zweite Bremseinheit in die Bremsstellung vorspannt und dazu ausgebildet ist, in Antwort auf ein Betätigen der Sicherheitsbremse durch den Fahrer die erste Bremseinheit und/oder die zweite Bremseinheit freizugeben. Für weitere Merkmale und Unteraspekte des bremsbaren Schlittens gemäß der weiteren Offenbarung wird vollumfänglich auf obenstehende Beschreibung zum ersten Aspekt der Erfindung Bezug genommen. So kann beispielsweise auch der Schlitten gemäß der weiteren Offenbarung eine Zugsicherung, insbesondere eine Zugsicherung gemäß den abhängigen Ansprüchen, aufweisen.

Ausführungsformen der Erfindung werden nun nachfolgen anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Figur 1: eine isometrische Ansicht einer ersten Ausführungsform eines bremsbaren Schlittens;
- Figur 2: eine isometrische Detailansicht einer ersten Bremseinheit des bremsbaren Schlittens gemäß der ersten Ausführungsform, wobei die erste Bremseinheit in einer Fahrposition ist;
- Figur 3: eine Seitenansicht der ersten Bremseinheit gemäß der ersten Ausführungsform, wobei die erste Bremseinheit in einer Bremsposition ist;
- Figur 4a: eine Draufsicht der ersten Bremseinheit gemäß der ersten Ausführungsform in der Fahrposition;
- Figur 4b: eine Schnittansicht der ersten Bremseinheit gemäß Figur 4a;
- Figur 5: eine isometrische Detailansicht einer ersten Umlenkung des bremsbaren Schlittens gemäß der ersten Ausführungsform;
- Figur 6: eine Ansicht des Schlittens gemäß der ersten Ausführungsform, wobei die Betätigungseinrichtung in einer Zugstellung ist;
- Figur 7: eine isometrische Ansicht einer zweiten Ausführungsform eines bremsbaren Schlittens mit einer Sicherheitsbremse;

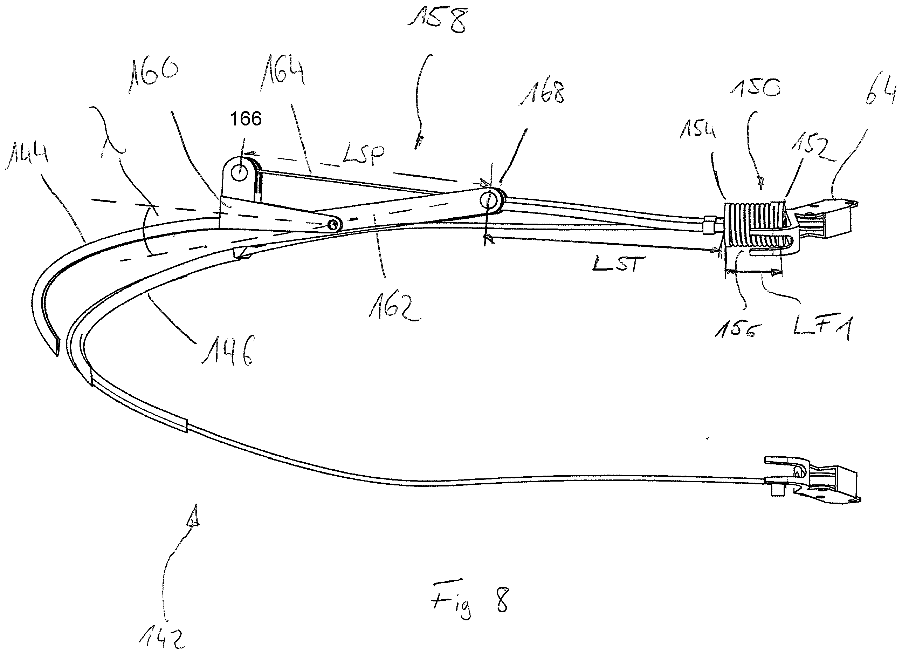

- Figur 8: eine isometrische Ansicht der Sicherheitsbremse gemäß dem zweiten Ausführungsbeispiel;
- Figur 9: eine isometrische Ansicht einer dritten Ausführungsform eines bremsbaren Schlittens;
- Figur 10: eine isometrische Detailansicht einer ersten Bremseinheit des bremsbaren Schlittens gemäß der dritten Ausführungsform, wobei die erste Bremseinheit in einer Fahrposition ist;
- Figur 11: eine Seitenansicht der ersten Bremseinheit gemäß der dritten Ausführungsform, wobei die erste Bremseinheit in einer Bremsposition ist;
- Figur 12a: eine Draufsicht der ersten Bremseinheit gemäß der dritten Ausführungsform in der Fahrposition;
- Figur 12b: eine Schnittansicht der dritten Bremseinheit gemäß Figur 12a;
- Figur 13: eine isometrische Detailansicht einer ersten Umlenkung des bremsbaren Schlittens gemäß der dritten Ausführungsform;
- Figur 14: eine Ansicht des Schlittens gemäß der dritten Ausführungsform, wobei die Betätigungseinrichtung in einer Zugstellung ist;
- Figur 15: eine isometrische Ansicht einer vierten Ausführungsform eines bremsbaren Schlittens mit einer Sicherheitsbremse; und
- Figur 16: eine isometrische Ansicht der Sicherheitsbremse gemäß dem vierten Ausführungsbeispiel.

Ein bremsbarer Schlitten 2 weist eine erste Kufe 4 und eine zweite Kufe 6 auf. Die erste Kufe 4 und die zweite Kufe 6 sind im Wesentlichen parallel ausgerichtet und geben eine Fahrtrichtung R des Schlittens 2 vor. Während einer Fahrt des Schlittens 2 weist eine Front 8 des Schlittens 2 in Fahrtrichtung R. Ein Heck 9 des Schlittens 2 liegt der Front 8 gegenüber. Zwischen der Front 8 und einem Sitz 10 erstreckt sich ein Frontbereich 12 des Schlittens 2. Ein erster Rahmen 14 und ein zweiter Rahmen 16 des Schlittens verbinden den Sitz 10 mit der ersten Kufe 4 und der zweiten Kufe 6. Vorzugsweise kann der Schlitten 2 auch nur einen ersten Rahmen 14 oder mehr als zwei Rahmen 14, 16 aufweisen. Der Sitz 10 kann direkt mit den Rahmen 14, 16 verbunden sein. Ebenso bevorzugt kann der Sitz 10 mittels einer ersten Längsstrebe 18 und einer zweiten Längsstrebe 20 mit den Rahmen 14, 16 verbunden sein. Es kann auch bevorzugt sein, dass die Längsstreben 18, 20 ein Teil des Sitzes 10 sind. Es soll verstanden werden, dass sich die Längsstreben 18, 20, auch wenn Sie abschnittsweise einen Teil des Sitzes 10 darstellen, bis in den Frontbereich 12 erstrecken können.

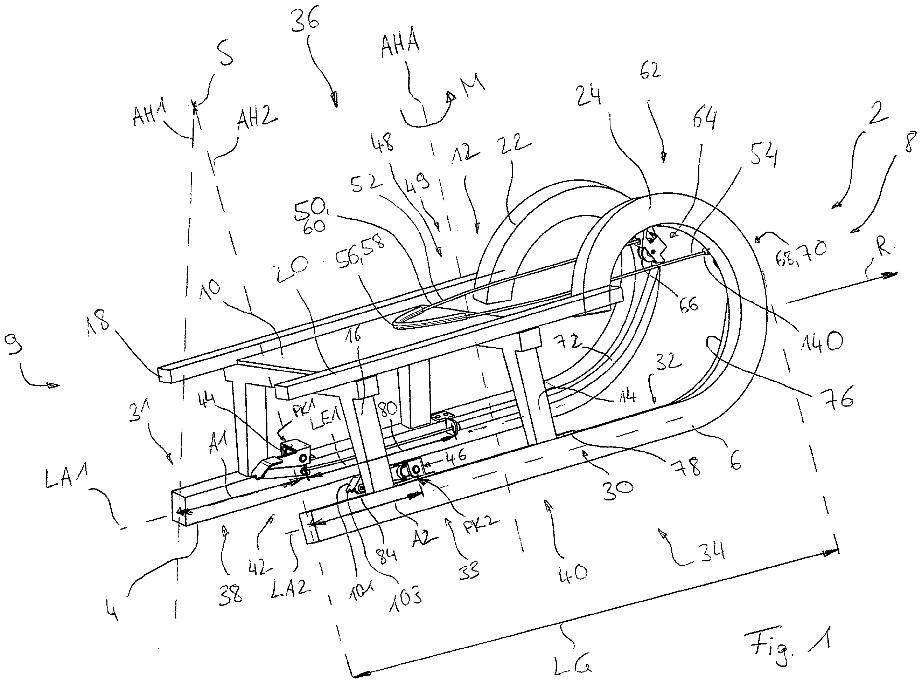

In diesem Ausführungsbeispiel erstreckt sich die erste Längsstrebe 18 von dem ersten Rahmen 14 über den zweiten Rahmen 16 zu einer ersten Verlängerung 22 der ersten Kufe 4 und eine zweite Längsstrebe 20 erstreckt sich von dem ersten Rahmen 14 über den zweiten Rahmen 16 zu einer zweiten Verlängerung 24 der zweiten Kufe 6. Hier sind die Längsstreben 18, 20 mit den Verlängerungen 22, 24 verbunden, wodurch eine Stabilität des Schlittens 2 verbessert werden kann. Es soll verstanden werden, dass Ausführungsformen ohne Längsstreben 18, 20, welche einen Rahmen 14, 16 mit einer Verlängerung 22, 24 einer Kufe 4,6 verbinden, ebenso bevorzugt sind. Die Verlängerungen 22, 24 sind hier bogenförmig ausgebildet. Die erste Verlängerung 22 erstreckt sich von einem ersten parallelen Abschnitt 26 der ersten Kufe 4 in Fahrtrichtung R nach vorne (in Figur 1 im Wesentlichen nach rechts) und von einer ersten Kufenoberseite 28 der ersten Kufe 4 nach oben. In analoger Weise erstreckt sich die zweite Verlängerung 24 von einem zweiten parallelen Abschnitt 30 der zweiten Kufe 6 in Fahrtrichtung R nach vorne und von einer zweiten Kufenoberseite 32 der zweiten Kufe 6 nach oben. Im parallelen Abschnitt 26 der ersten Kufe 4 ist eine Längsachse LA1 der ersten Kufe 4 im Wesentlichen parallel zu einer gleitfähigen Unterlage 34. In analoger Weise ist eine Längsachse LA2 der Zweiten Kufe 6 im Wesentlichen parallel zur gleitfähigen Unterlage 34. Vorzugsweise können die Verlängerungen 22, 24 auch als gerade Verlängerungen ausgebildet sein, wobei zwischen den parallelen Abschnitten 26, 30 und den Verlängerungen 22, 24 ein Knick (nicht dargestellt) angeordnet ist. Durch die Verlängerungen 22, 24 wird vermieden, dass die Kufen 4, 6 während der Fahrt in Fahrtrichtung R in die gleitfähige Unterlage 34 eingreifen und den Schlitten 2 abbremsen.

Um eine Fahrstabilität des Schlittens 2 zu erhöhen, sind die Kufen 4, 6 leicht nach innen geneigt, wobei sich eine Hochachse AH1 der ersten Kufe 4 und eine Hochachse AH2 der zweiten Kufe 6 auf einer der Unterlage 34 gegenüberliegenden Seite 36 des bremsbaren Schlittens 2 schneiden. Es soll verstanden werden, dass ein Schnittpunkt S der Hochachsen AH1, AH2 auch zwischen dem Sitz 10 und der gleitfähigen Unterlage 34 angeordnet sein kann, und auch, dass die Kufen 4, 6 nicht geneigt sein müssen. Durch das Aufbringen von Kräften auf die Verlängerungen 22, 24 der Kufen 4, 6 kann ein Fahrer während der Fahrt mit dem Schlitten 2 eine Neigung der Kufen 4, 6 verändern, wodurch sich die Lage des Schnittpunkt S der Hochachsen AH1, AH2 verändert und der Schlitten 2 gesteuert werden kann. Die Hochachsen AH1, AH2 sind senkrecht zu den Längsachsen AL1, AL2 der jeweiligen Kufen 4, 6.

Während der Fahrt kann sich ein Fahrer auf den Sitz 10 setzen und seine Füße auf den Kufe 4, 6, insbesondere den Verlängerungen 22, 24, abstellen. Um einen Reibungswiderstand der Kufen 4, 6 auf der gleitfähigen Unterlage 34, wie insbesondere Schnee oder Eis, und/oder einen Verschleiß der Kufen 4, 6 zu reduzieren, können die Kufen 4, 6 Gleitelemente aufweisen (nicht dargestellt). Bevorzugt sind die Gleitelemente als metallische Bänder oder als Kunststoffbänder ausgebildet, die auf Unterseiten 38, 40 der Kufen 4, 6 angeordnet sind.

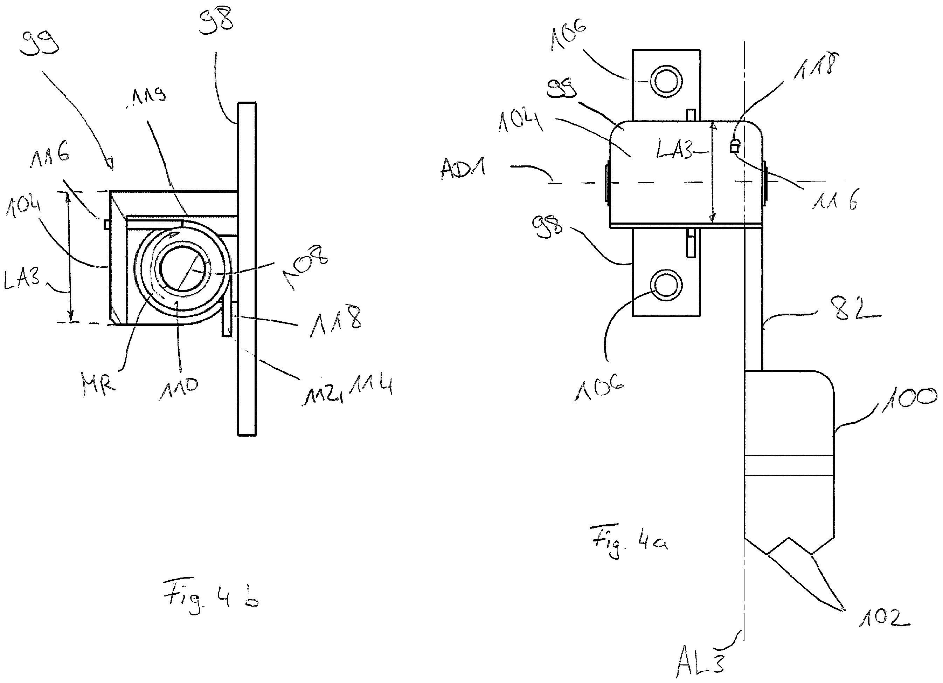

Zum Bremsen des Schlittens 2 ist eine Bremsvorrichtung 42 vorgesehen, die eine erste Bremseinheit 44 und eine zweite Bremseinheit 46 aufweist. Die erste Bremseinheit 44 und die zweite Bremseinheit 46 können mittels einer Betätigungseinrichtung 48 in eine Bremsstellung (vgl. Fig. 4) eingelegt werden. Die Betätigungseinrichtung 48 weist hier ein Bremsseil 50 auf, das sich von dem Frontbereich 12 bis an den Sitz 10 des Schlittens 2 erstreckt. Ein Abschnitt 49 der Betätigungseinrichtung 48 ist dabei zwischen der Front 8 und dem Sitz 10 angeordnet. Durch die Anordnung eines Griffabschnitts 56 der Betätigungseinrichtung 48 zwischen dem Sitz 10 und der Front 8 kann erreicht werden, dass Arme eines Fahrers des Schlittens 2 in Fahrtrichtung R weisen. Es soll verstanden werden, dass der Griffabschnitt 56 auch von dem Frontbereich 12 über den Sitz 10 ragen kann, wobei für die Anordnung zwischen dem Sitz 10 und der Front 8 derjenige Abschnitt des Sitzes 10 entscheidend ist, auf dem der Fahrer sitzt. Hier hat das Bremsseil 50 einen ersten Seilabschnitt 52 zum Einlegen der ersten Bremseinheit 44 in eine Bremsstellung (in Fig. 1 nicht dargestellt) und einen zweiten Seilabschnitt 54 zum Einlegen der zweiten Bremseinheit 46 in die Bremsstellung. Der erste Seilabschnitt 52 und der zweite Seilabschnitt 54 sind mittels des Griffabschnitts 56 der Betätigungseinrichtung 48 verbunden. Es kann jedoch auch vorgesehen sein, dass die Betätigungseinrichtung 48 separate erste und zweite Seilabschnitte 54, 56 aufweist. Vorzugsweise ist das Bremsseil 50 im Bereich des Griffabschnitts 56 mit einem Mantel 58 versehen. Vorzugsweise ist der Mantel 58 aus einem weichen und rutschfesten Material, insbesondere Kunststoffmaterial, gebildet. Das Bremsseil 50 ist hier als Drahtseil 60 gebildet. Ein Mantel 58 verhindert ein Einschneiden des Bremsseils 50 in die Hände eines Benutzers. Vorzugsweise kann das Bremseinheit 50 auch als einfacher Draht, aus einem Kunststoff oder aus einem Naturmaterial gebildet sein.

Zieht ein Fahrer (nicht dargestellt), der auf dem Sitz 10 sitzt und dessen Brust in Richtung der Front 8 weist, den Griffabschnitt 56 mit beiden Händen zu sich heran, werden die erste Bremseinheit 44 und die zweite Bremseinheit 46 in die Bremsstellung eingelegt. Dabei wird das Bremsseil 50 mittels einer Umlenkeinrichtung 62 umgelenkt, die im Frontbereich 12 des Schlittens 2 angeordnet ist. Gemäß diesem Ausführungsbeispiel weist die Umlenkeinrichtung 62 eine erste Umlenkung 64 auf, die hier eine erste Umlenkrolle 66 für den ersten Seilabschnitt 52 aufweist und an der ersten Verlängerung 22 angeordnet ist. Ferner weist die Umlenkeinrichtung 62 eine zweite Umlenkung 68 auf, die als Umlenkrolle 70 (in Fig. 1 durch die zweite Kufe 6 verdeckt) ausgebildet und an der zweiten Verlängerung 24 angeordnet ist. Zwischen der ersten Umlenkung 66 und der ersten Bremseinheit 44 ist der erste Seilabschnitt 52 abschnittsweise in einer Hülle 72 geführt. Die Hülle 72 ist vorzugsweise an der ersten Kufe 4, insbesondere der ersten Verlängerung 22, befestigt. Gemäß diesem Ausführungsbeispiel erstreckt sich die Hülle 72 abschnittsweise in den parallelen Abschnitt 26 der ersten Kufe 4 und endet an einer ersten Endplatte 74, die benachbart zum ersten Rahmen 14 an der ersten Kufe 4 befestigt ist. Es soll verstanden werden, dass die erste Endplatte 74 auch an der Verlängerung 22 angebracht sein kann oder, dass der Schlitten 2 keine Endplatte 74 aufweist. Ferner kann auch vorgesehen sein, dass sich die Hülle 72 bis nahe an die erste Bremseinheit 44 erstreckt, wobei eine Beweglichkeit der ersten Bremseinheit 44 gewährleistet sein muss. Der zweite Seilabschnitt 54 ist vorzugsweise analog zu dem ersten Seilabschnitt 52 in einer zweiten Hülle 76 geführt, wobei eine zweite Endplatte 78 vorgesehen ist. Eine Anordnung der zweiten Hülle 76 und der zweiten Endplatte 78 ist hier im Wesentlichen symmetrisch zu einer Anordnung der ersten Hülle 72 und der ersten Endplatte 74 für den ersten Seilabschnitt 52 ausgebildet. Ein an der ersten Endplatte 74 aus der ersten Hülle 72 hervorstehendes Ende 80 des ersten Seilabschnitts 52 ist mit einem ersten Betätigungshebel 82 der ersten Bremseinheit 44 verbunden. In analoger Weise, ist ein an der zweiten Endplatte 78 aus der zweiten Hülle 76 hervorstehendes Ende 81 des zweiten Seilabschnitts 54 mit einem zweiten Betätigungshebel 84 verbunden. Vorzugsweise sind die erste Bremseinheit 44 und die zweite Bremseinheit 46 spiegelsymmetrisch ausgebildet.

Die erste Bremseinheit 44 ist unabhängig von der zweiten Bremseinheit 46 in die Bremsstellung einlegbar. Beispielsweise kann ein Fahrer den ersten Seilabschnitt 52 mit einer ersten Hand zu sich heranziehen um die erste Bremseinheit 44 in die Bremsstellung zu bringen, während er mit seiner zweiten Hand eine Lageänderung des zweiten Seilabschnitts 54 im Wesentlichen verhindert oder diesen eher nach vorne bewegt. Ferner kann ein Fahrer die erste Bremseinheit 44 und die zweite Bremseinheit 46 mit variierender Intensität betätigen. Beispielsweise kann der Fahrer auf den ersten Seilabschnitt 52 eine größere Betätigungskraft aufbringen oder den ersten Seilabschnitt 52 stärker zu sich heranziehen, als den zweiten Seilabschnitt 54. Hierdurch können durch die erste Bremseinheit 44 und die zweite Bremseinheit 46 erzielte Bremswirkungen unabhängig voneinander gesteuert werden, sodass die Bremsvorrichtung 42 zum Steuern des Schlittens 2 verwendet werden kann.

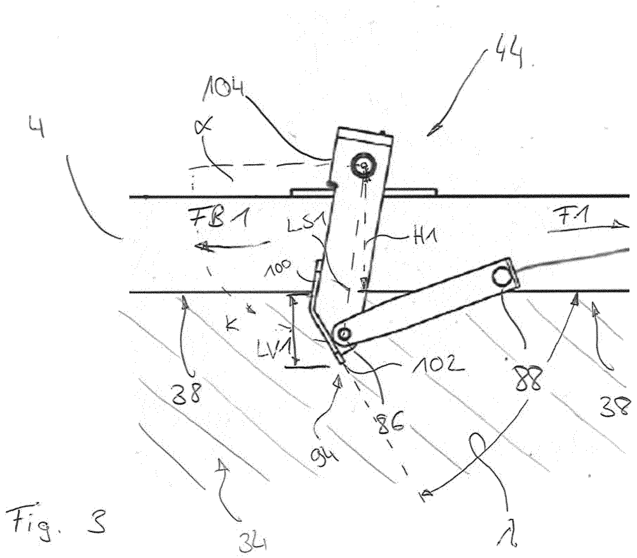

Greift die erste Bremseinheit 46 in der Bremsstellung in die Unterlage 34 ein (Figur 3), wird eine erste Bremskraft FB1 bereitgestellt, die im Wesentlichen parallel zur ersten Längsachse AL1 der ersten Kufe 4 und entgegengesetzt zur Fahrtrichtung R ist. In analoger Weise stellt die zweite Bremseinheit 46 an der zweiten Kufe 6 eine zweite Bremskraft FB2 bereit, wenn sie in der Bremsstellung in die Unterlage 34 eingreift, wobei die zweite Bremskraft FB2 parallel zur zweiten Längsachse LA2 der zweiten Kufe 6 und entgegengesetzt zur Fahrtrichtung R ist. Sind die erste Bremskraft FB1 und die zweite Bremskraft FB2 unterschiedlich groß, wird ein Drehmoment M um eine Haupthochachse AHA des Schlittens 2 bereitgestellt, wodurch der Schlitten 2 in eine Kurvenfahrt verbracht wird.

Das bereitgestellte Drehmoment M wird ferner durch eine Anordnung der ersten Bremseinheit 44 auf der ersten Kufe 4 und eine Anordnung der zweiten Bremseinheit 46 auf der zweiten Kufe 6 beeinflusst. Vorzugsweise sind die erste Bremseinheit 44 und die zweite Bremseinheit 46 in hinteren Abschnitten 31, 33 der Kufen 4, 6 angeordnet. Besonders bevorzugt weist ein Abstand A1 zwischen dem Heck 9 und einem Kraftangriffspunkt PK1 der ersten Bremseinheit 44 an der ersten Kufe einen Wert in einem Bereich von 5 % bis 50%, bevorzugt 5% bis 40 %, bevorzugt 10 % bis 40 %, bevorzugt 10 % bis 35 %, besonders bevorzugt 15 % bis 35 %, einer Gesamtlänge LG des Schlittens, gemessen zwischen dem Heck 9 und der Front 8, auf. In analoger Weise weist ein Abstand A2 zwischen dem Heck 9 und einem Kraftangriffspunkt PK2 der zweiten Bremseinheit 46 an der zweiten Kufe 6 einen Wert in einem Bereich von 5 % bis 50 %, bevorzugt 5 % bis 40 %, bevorzugt 10 % bis 40 %, bevorzugt 10 % bis 35 %, besonders bevorzugt 15 % bis 35 %, der Gesamtlänge LG des Schlittens 2 auf.

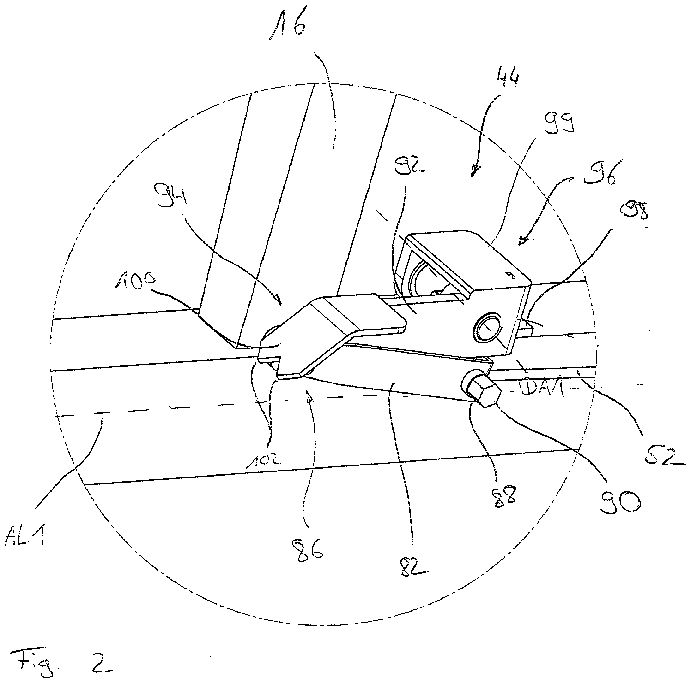

Die erste Bremseinheit 44 ist hier benachbart zum ersten Rahmen 14 angeordnet (Fig. 2). Der Betätigungshebel 82 der ersten Bremseinheit 44 weist ein erstes Ende 86 und ein zweites Ende 88 auf. Das zweite Ende 88 ist mittels eines Klemmelements 90 mit der Betätigungseinrichtung 48, in diesem Ausführungsbeispiel dem ersten Seilabschnitt 52, verbunden. Vorzugsweise ist die Verbindung zwischen dem ersten Seilabschnitt 52 und dem zweiten Ende 88 des Betätigungshebels 82 mittels eines Bowdenzugnippels und einer Klemmschraube realisiert. Ferner bevorzugt kann die Verbindung auch als Schweißverbindung, Lötverbindung, Klebeverbindung und/oder als formschlüssige Verbindung ausgeführt sein.

Das erste Ende 86 des Betätigungshebels 82 ist drehbar mit einem zweiten Ende 94 eines ersten Schwenkhebels 92 der ersten Bremseinheit 44 verbunden. Hier ist der Betätigungshebel 82 im Wesentlichen U-förmig, sodass das erste Ende 86 des Betätigungshebels 82 das zweite Ende 94 des ersten Schwenkhebels 92 abschnittsweise umgibt. Ein erstes Ende 96 des ersten Schwenkhebels 92 weist hier einen ersten Käfig 99 auf, der gegenüber einer Lagerplatte 98 der ersten Bremseinheit 44 um eine Drehachse AD1 drehbar gelagert ist. Es soll verstanden werden, dass der erste Schwenkhebel 92 auch ohne Käfig drehbar um die Drehachse AD1 gelagert sein kann. Beispielsweise kann der erste Schwenkhebel 92 eine Achse aufweisen, die die Drehachse AD1 definiert und in einer Lagerung aufgenommen ist. Bevorzugt ist die Drehachse AD1 des ersten Schwenkhebels 92 im Wesentlichen senkrecht zur ersten Längsachse AL1 und der ersten Hochachse AH1 der ersten Kufe 4. Zieht der Fahrer den ersten Seilabschnitt 52 zu sich heran, um die erste Bremseinheit 44 in die Bremsstellung einzulegen, reduziert sich eine Länge LE1 des aus der ersten Endplatte 74 hervorstehenden Endes 80, wobei sich das zweite Ende 90 des ersten Betätigungshebels 82 in Richtung der Front 8 bewegt. Aufgrund der Kopplung des ersten Betätigungshebels 82 und des ersten Schwenkhebels 92, nähert sich auch ein zweites Ende 94 des ersten Schwenkhebels 92 der Front 8 an. Dabei bewegt sich das zweite Ende 94 des Schwenkhebels 92 auf einer Kreisbahn K.

Da eine Länge LS1 des ersten Schwenkhebels 92, gemessen zwischen der Drehachse AD1 und dem zweiten Ende 94 des ersten Schwenkhebels 92, größer ist als eine Höhe H1 der ersten Kufe 4, gemessen zwischen der Drehachse AD1 und der Unterseite 38 der ersten Kufe 4, steht das zweite Ende 94 des ersten Schwenkhebels 92 in der Bremsstellung von der Unterseite 38 der ersten Kufe 4 hervor. Vorzugsweise weist der erste Schwenkhebel 92 eine erste Kralle 100 auf, welche über das zweite Ende 94 des ersten Schwenkhebels 92 hervorstehend ausgebildet ist. Bevorzugt weist eine Vorsprungslänge LV1 der erste Kralle 100, gemessen senkrecht zur Unterseite 38 der ersten Kufe 4 zwischen der Unterseite 38 und einer Spitze 102 der ersten Kralle 100, einen Wert in einem Bereich von 10 mm bis 80 mm, bevorzugt 20 mm bis 70 mm, bevorzugt 20 mm bis 60 mm, bevorzugt 20 mm bis 50 mm, bevorzugt 30 mm bis 50 mm, besonders bevorzugt 40 mm, auf, wenn eine Längsachse AL3 des ersten Schwenkhebels 92 senkrecht zur ersten Längsachse LA1 der ersten Kufe 4 ist.

Gemäß diesem Ausführungsbeispiel weist die erste Kralle 100 zwei Spitzen 102 auf. Es soll jedoch verstanden werden, dass die erste Kralle 100 auch nur eine oder mehr als zwei Spitzen 102 aufweisen kann und/oder dass die Spitzen 102 eine voneinander verschiedene Länge aufweisen können.

Um einen möglichen Bewegungsbereich der Bremseinheit 44 zu beschränken, weist der Käfig 99 eine Anschlagplatte 104 auf (Figur 3). In einer Fahrstellung (Figur 2), in der die erste Bremseinheit 44 nicht mit der Unterlage 34 im Eingriff steht, ist die Anschlagplatte 104 im Wesentlichen parallel zur Lagerplatte 98 (Figur 4). Wird die Betätigungseinrichtung 48 zum Einlegen der ersten Bremseinheit 44 betätigt, verschwenkt der erste Schwenkhebel 82 um die Drehachse AD1. Da der Käfig 99 an dem Schwenkhebel 82 fixiert ist, wird auch die Anschlagplatte 104 um die Drehachse AD1 verschwenkt. In einer volleingelegten Bremsstellung ist die Anschlagplatte 104 mit der Lagerplatte 98 in Kontakt und verhindert ein weiteres Verschwenken des Schwenkhebels 82. Gemäß diesem Ausführungsbeispiel weist ein Drehwinkel α des Schwenkhebels 82 zwischen der Fahrstellung und der volleingelegten Bremsstellung einen Wert von 90° auf. Es kann jedoch auch vorgesehen sein, dass der Drehwinkel α einen Wert mit einem Bereich von 10° bis 150°, 30° bis 120°, bevorzugt 60° bis 120°, bevorzugt 70° bis 110°, bevorzugt 80° bis 100°, aufweist. Der Drehwinkel α kann in besonders einfacher Weise mittels Variation einer Länge LA3 der Anschlagplatte 104 eingestellt werden kann, wobei die Länge LA3 der Anschlagplatte 104 parallel zu einer Länge LS1 des ersten Schwenkhebels 82 gemessen wird. In der volleingelegten Bremsstellung weist ein Bremswinkel β zwischen der Längsachse der Kralle 100 und einer von den Kufen 4,6 definierten Auflageebene einen Wert von etwa 110° auf.

Die Lagerplatte 98 weist Bohrungen 106 auf und kann mittels geeigneter Befestigungsmittel, insbesondere Schrauben, an der ersten Kufe 4 des Schlittens 2 befestigt werden. Vorzugsweise kann die Lagerplatte 98 auch mit der ersten Kufe 4 verklebt sein oder unter Verwendung von Bändern, welche die erste Kufe 4 zumindest abschnittsweise umschlie-βen, an der ersten Kufe 4 befestigt sein. Die Drehachse AD1 des ersten Schwenkhebels 82 wird durch einen Lagerbolzen 108 der Lagerplatte 98 definiert. Zwischen dem Lagerbolzen 108 und dem Käfig 99 sind gemäß diesem Ausführungsbeispiel Wälzlager 110 vorgesehen (Figur 4b). Ebenso bevorzugt können auch Gleitlagerbuchsen zwischen dem Lagerbolzen 108 und dem Käfig 99 angeordnet sein. Ferner bevorzugt können der Lagerbolzen 108 und der Käfig 99 auch unmittelbar in Kontakt stehen, wobei der Lagerbolzen 108 bevorzugt in korrespondierende Öffnungen des Käfigs 99 aufgenommen ist. Hierfür werden keine gesonderten Lagerelemente benötigt, wodurch eine besonders einfache und kostengünstige Konstruktion erreicht werden kann. Durch die Verwendung von Wälzlagern 110 oder Gleitlagerbuchsen kann bevorzugt ein Reibungswiderstand und/oder ein Verschleiß reduziert werden.

Zum Verbringen der in die Bremsstellung eingelegten ersten Bremseinheit 44 in die Fahrstellung, weist die erste Bremseinheit 44 eine Rückstelleinrichtung 112 auf, die hier als Drehfeder 114 ausgebildet ist. Vorzugsweise kann die Rückstelleinrichtung 112 auch andere elastische Elemente, wie Beispielsweise Spiralfedern oder elastische Bänder, aufweisen. Ein erstes Federnde 116 der Drehfeder 114 erstreckt sich hier durch eine korrespondierende Fixieröffnung 118 des Käfigs 99 (Figur 4a). Zum Fixieren des ersten Federendes 116 am Käfig 99, ist das erste Federende 116 umgebogen. Es kann jedoch auch vorgesehen sein, das erste Federende 116 mittels eines Sicherungselements, einer Schweißverbindung, einer Klebeverbindung oder mittels einer anderen bekannten Befestigungsmöglichkeit zu fixieren. Ein zweites Federende 119 liegt an der Lagerplatte 98 an. Wird der erste Schwenkhebel 92 um die erste Drehachse AD1 verschwenkt, werden der Käfig 99 und somit auch die korrespondierende Öffnung 118 um die Drehachse AD1 verdreht, wobei der Käfig 99 das Federende 116 mitnimmt und die Drehfeder 114 spannt. Gibt der Fahrer die Betätigungseinrichtung 48 frei, wirkt keine Betätigungskraft FB1 mehr in Richtung der Front 8. Die Drehfeder 114 bringt dann ein Rückstellmoment MR auf den Käfig 99 auf und verbringt die erste Bremseinheit 44 zurück in eine Fahrstellung. Bevorzugt ist die Längsachse AL3 des ersten Schwenkhebels 82 in der Fahrstellung im Wesentlichen parallel zur ersten Längsachse AL1 der ersten Kufe 4. Um einen Bewegungsradius der durch die Drehfeder 114 initiierten Rückstellbewegung zu begrenzen, liegt der Käfig 99 in der Fahrstellung vorzugsweise mit einer zweiten Anschlagplatte 120 an der Lagerplatte 98 an.

Hier ist die zweite Anschlagplatte 120 senkrecht zur Anschlagplatte 104 und in der Fahrstellung im Wesentlichen parallel zur ersten Hochachse AH1 der ersten Kufe 4. Die Anschlagplatte 104 und die zweite Anschlagplatte 120 können untereinander auch einen von 90° verschiedenen Winkel einschließen.

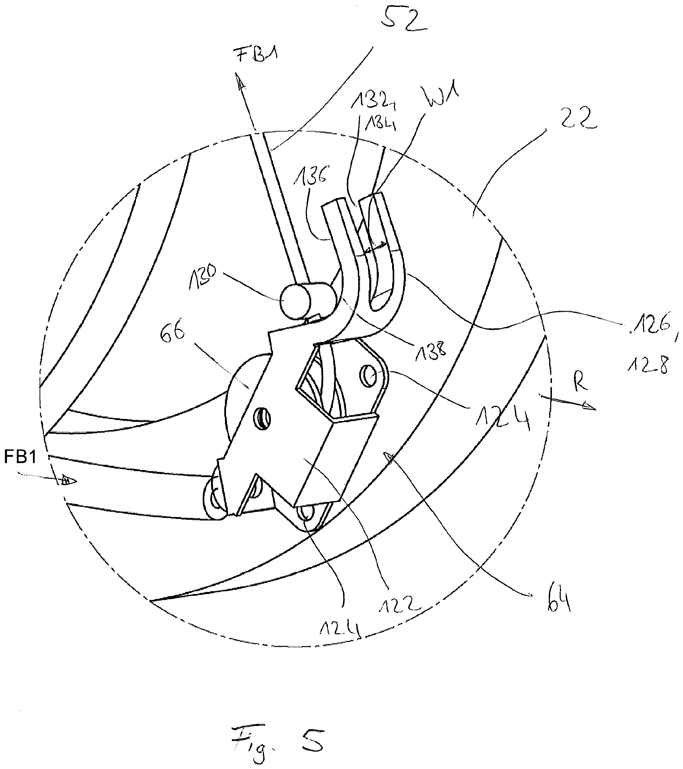

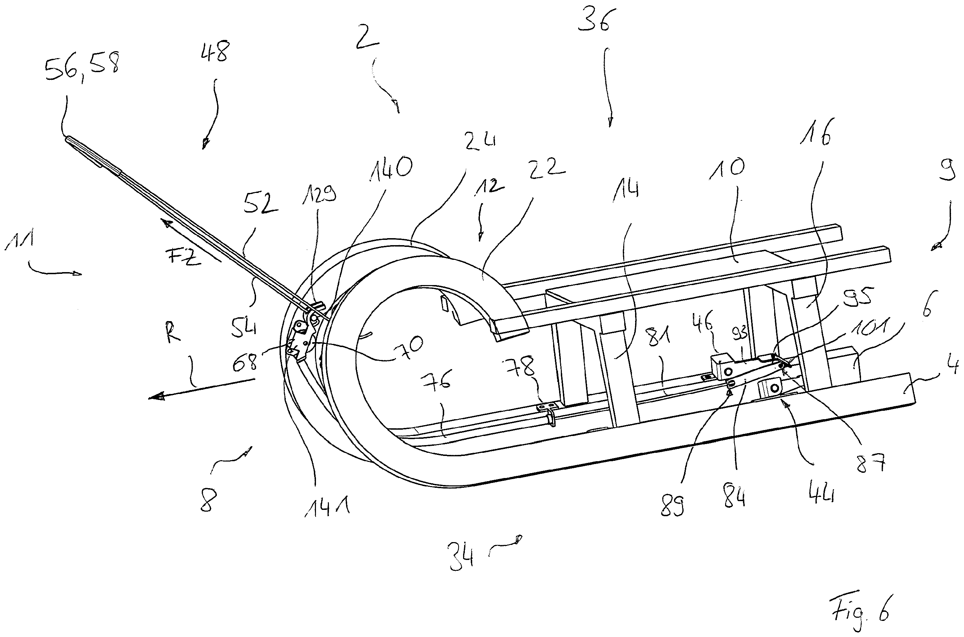

Die erste Umlenkung 64 der Umlenkeinrichtung 62 ist an der ersten Verlängerung 22 der ersten Kufe 4 angeordnet. Dabei ist die erste Umlenkung 64 vorzugsweise mittels Schrauben (nicht dargestellt), die in Bohrungen 124 eines Umlenkgehäuses 122 der ersten Umlenkung 64 aufgenommen sind, an der ersten Verlängerung 22 befestigt. Es kann jedoch auch vorgesehen sein, die erste Umlenkung 64 mittels anderer geeigneter Befestigungsmittel, wie beispielsweise Klebstoff oder Nägeln, an der ersten Verlängerung 22 zu befestigen. Ferner kann die erste Umlenkung 64 zumindest abschnittsweise integral mit der ersten Verlängerung 22 ausgebildet sein. Gemäß diesem Ausführungsbeispiel weist die erste Umlenkung 64 eine erste Umlenkrolle 66 auf, die drehbar in einem ersten Umlenkgehäuse 122 gelagert ist und den ersten Seilabschnitt 52 umlenkt. Wie die in Figur 5 dargestellten Pfeile verdeutlichen, wird eine Kraftrichtung einer vom Fahrer auf den ersten Seilabschnitt 52 aufgebrachten Betätigungskraft FB1 geändert (Fig. 6). Durch die erste Umlenkung 64 und/oder die zweite Umlenkung 68 wird dabei eine Gegenkraft (nicht dargestellt) auf die erste Verlängerung 22 und/oder zweite Verlängerung 24 aufgebracht. Vorzugsweise bewirkt die Gegenkraft eine Verlagerung des Schnittpunkts S der Hochachsen AH1, AH2, wodurch eine Lenkwirkung erreicht werden kann.

Vorzugsweise kann die Betätigungseinrichtung 48 in einer Zugstellung zum Ziehen des Schlittens 2 verwendet werden (Figur 6). In der Zugstellung ist der Griffabschnitt 56 auf einer dem Heck 9 gegenüberliegenden Seite 11 der Front 8 des Schlittens 2 angeordnet. Der erste Seilabschnitt 52 und der zweite Seilabschnitt 54 erstrecken sich von der ersten Umlenkung 64 und der zweiten Umlenkung 68 in Fahrtrichtung R. Beim Ziehen des Schlittens 2 mittels des Griffabschnitts 56 wird eine Zugkraft FZ auf das Bremsseil 50 aufgebracht. Würden die erste Bremseinheit 44 und die zweite Bremseinheit 46 in der Zugstellung eingelegt, würde eine Bremswirkung bereitgestellt werden, die das Ziehen des Schlittens 2 erschweren würde. Dies kann durch die Zugsicherung 126 des Schlittens 2 verhindert werden. Ein erstes Gegenstück 128 der Zugsicherung 126 ist hier einstückig mit dem ersten Umlenkgehäuse 122 ausgebildet. Es kann auch vorgesehen sein, dass das erste Gegenstück 128 unabhängig von der ersten Umlenkung 64 an der ersten Verlängerung 22 angeordnet ist. Der erste Seilabschnitt 52 hat hier einen ersten Anschlag 130. Der erste Anschlag 130 ist größer als eine lichte Weite W1 einer ersten Öffnung 132 des ersten Gegenstücks 128, die hier als erster Schlitz 134 ausgebildet ist. Befindet sich die Betätigungseinrichtung 48 in der Zugstellung, ist der erste Seilabschnitt 52 in der ersten Öffnung 132 des ersten Gegenstücks 128 aufgenommen. Eine als Schlitz 134 ausgeführte erste Öffnung 132 erleichtert ein Einlegen der Zugsicherung 126. Der erste Seilabschnitt 52 kann besonders einfach in den Schlitz 134 eingelegt werden, wenn die Betätigungseinrichtung 48 in die Zugstellung gebracht werden soll. Es kann jedoch auch vorgesehen sein, dass die erste Öffnung 132 eine geschlossene, besonders bevorzugt verschließbare Öffnung, ist. Vorzugsweise ist die zweite Umlenkung 68 analog zur ersten Umlenkung 64 ausgebildet, wobei vollumfänglich auf obenstehende Beschreibung zur ersten Umlenkung 64 Bezug genommen wird. Vorzugsweise weist die Zugsicherung ein zweites Gegenstück 129 auf, das analog zum ersten Gegenstück 126 ausgebildet ist, wobei das zweite Gegenstück 129 zum Aufnehmen eines zweiten Anschlags 140 in der Zugstellung vorgesehen ist. Bezüglich einer Ausgestaltung des zweiten Gegenstücks 129 wird vollumfänglich auf obenstehende Beschreibung zum ersten Gegenstück 128 Bezug genommen. Das zweite Gegenstück 129 der Zugsicherung 126 ist also einstückig mit einem zweiten Umlenkgehäuse 141 ausgebildet. Der zweite Anschlag 140 ist mit dem zweiten Seilabschnitt 54 verbunden und liegt an dem zweiten Gegenstück 129 an, wobei ein Einlegen der zweiten Bremseinheit 46 in die Bremsstellung verhindert wird.

Wird der Schlitten 2 durch einen Benutzer gezogen, greift der erste Anschlag 130 in das erste Gegenstück 128 ein und verhindert ein Herausziehen des ersten Seilabschnitts 52 in Fahrtrichtung R. Ein Durchtreten des Anschlags 130 durch den Schlitz 134 wird dadurch verhindert, dass der Anschlag 130 quer zu einer Längsrichtung des Bremsseils 50 größer ist, als die korrespondierende lichte Weite W1 der ersten Öffnung 132. Vorzugsweise ist eine erste Kontaktfläche 136, an welcher der Anschlag 130 in der Zugstellung anliegt, gekrümmt ausgebildet. Gemäß diesem Ausführungsbeispiel ist die erste Kontaktfläche 136 konvex, wobei eine Ausbauchung 138 in Fahrtrichtung R weist. Durch eine gekrümmte erste Kontaktfläche 136 kann ein Abrutschen des ersten Anschlags 130 von der Kontaktfläche 136 des ersten Gegenstücks 128 verhindert werden.

Der erste Anschlag 130 und der zweite Anschlag 140 sind hier als Quetschhülsen ausgebildet, die mittels mechanischer Verformung an den Seilabschnitten 52,54 befestigbar sind. Es kann jedoch auch vorgesehen sein, dass der erste Anschlag 130 und/oder der zweite Anschlag 140 als Klemmelemente ausgeführt, mit einer Verklebung an der Betätigungseinrichtung 48 befestigt und/oder als Verdickungen des jeweiligen Seilabschnitts 52, 54 ausgebildet sind. Ferner bevorzugt ist der erste Anschlag 130 größer als ein freier Querschnitt des Raums, der zwischen der ersten Umlenkrolle 66 und dem ersten Umlenkgehäuse 122 gebildet ist, sodass ein Durchführen des ersten Anschlags 130 durch das erste Umlenkgehäuse 122 verhindert wird.

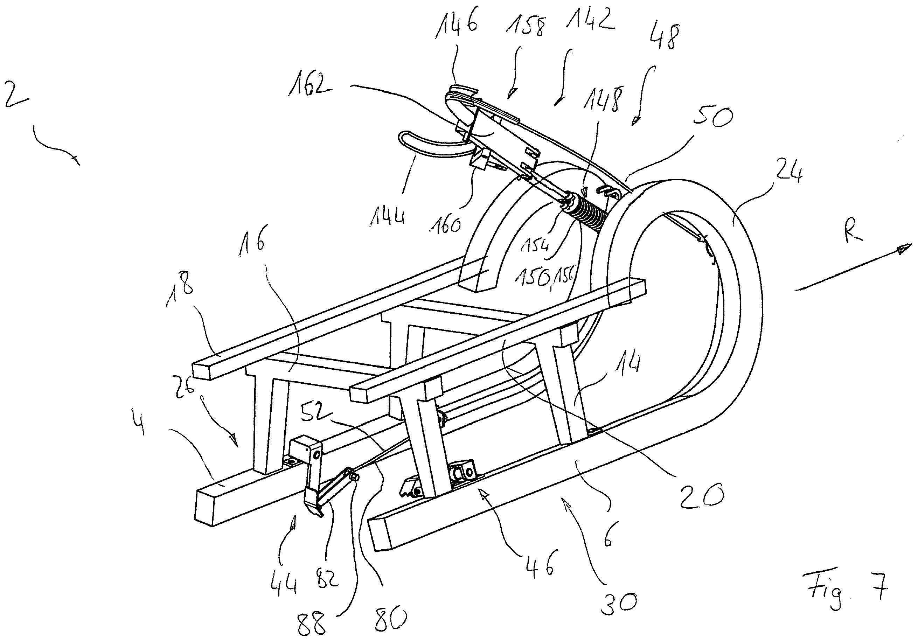

Gemäß einem zweiten bevorzugten Ausführungsbeispiel (Figur 7), das aber auch eine Weiterbildung des ersten Ausführungsbeispiels sein kann, kann der bremsbare Schlitten 2 ferner eine Sicherheitsbremse 142 aufweisen (Sitz 10 in Figur 7 nicht dargestellt). Die Sicherheitsbremse 142 ist mit der Betätigungseinrichtung 48 verbunden und dazu ausgebildet, die erste Bremseinheit 44 und/oder die zweite Bremseinheit 46 der Bremseinheit 42 in Bremsstellung zu bringen, wenn der Fahrerdie Sicherheitsbremse 142 loslässt. Hier weist die Sicherheitsbremse 142 einen ersten Sicherheitsgriff 144 und einen zweiten Sicherheitsgriff 146 auf, wobei der Griffabschnitt 56 in einem Teilabschnitt 147 des zweiten Sicherheitsgriffs 146 aufgenommen ist. Die Sicherheitsbremse 142 ist dazu ausgebildet, die Betätigungseinrichtung 48 zu betätigen, wenn der erste Sicherheitsgriff 144 und der zweite Sicherheitsgriff 146 zueinander beabstandet sind.

Ferner sind der erste Sicherheitsgriff 144 und der zweite Sicherheitsgriff 146 mit einer Spannvorrichtung 148 verbunden, die dazu ausgebildet ist, die Bremsvorrichtung 42 in Bremsstellung zu bringen, wenn der erste Sicherheitsgriff 144 und der zweite Sicherheitsgriff zueinander beabstandet sind. Die Spannvorrichtung 148 ist vorzugsweise als Federspeicher 150 ausgebildet, wobei ein erstes Federspeicherende 152 des Federspeichers 150 an der ersten Umlenkung 64 anliegt. Das Bremsseil 50 erstreckt sich durch das erste Federspeicherende 152 und durch ein zweites Federspeicherende 154 des Federspeichers 150, wobei das zweite Federspeicherende 154 dem ersten Federspeicherende 152 gegenüberliegt. Das Bremsseil 50 ist an dem zweiten Federspeicherende 154 fixiert. Zwischen den Federspeicherenden 152, 154 ist eine Spannfeder 156 angeordnet, die Vorzugsweise eine Spiralfeder ist. In einem Sicherheitszustand definiert die Spannfeder 156 eine erste Federspeicherlänge LF1, gemessen zwischen dem ersten Federspeicherende 152 und dem zweiten Federspeicherende 154. Da der erste Seilabschnitt 52 sowohl an dem zweiten Ende 88 des ersten Betätigungshebels 82 als auch dem zweiten Federspeicherende 154 fixiert ist, ist zwischen dem zweiten Federspeicherende 154 und dem zweiten Ende 88 des ersten Betätigungshebels 82 ein definierter Längenabschnitt des ersten Seilabschnitts 52 angeordnet. Wenn sich das erste Federspeicherende 152 an der ersten Umlenkung 64 abstützt, dann korrespondiert die Länge LE1 des aus der Hülle 72 hervorstehenden Endes 80 des ersten Seilabschnitts 52 mit der Länge des Federspeichers 150. Vorzugsweise ist die erste Bremseinheit 44 in die Bremsstellung eingelegt, wenn die Spannfeder 156 im Sicherheitszustand ist und der Federspeicher 150 die erste Federspeicherlänge LF1 aufweist. Es soll verstanden werden, dass eine von der Spannfeder 156 im Sicherheitszustand aufgebrachte Spannkraft größer ist, als die von der Rückstelleinrichtung 112 bereitgestellte Rückstellkraft. Ist die Sicherheitsbremse 142 in dem Sicherheitszustand, wird die Betätigungseinrichtung 48 durch die Sicherheitsbremse 142 betätigt und die erste Bremseinheit 44 eingelegt, wodurch der Schlitten 2 gebremst wird.

Zum Freigeben der Sicherheitsbremse 142 wird der Federspeicher 150 gespannt, wobei eine zweite Federspeicherlänge LF2 im Fahrzustand geringer ist, als die erste Federspeicherlänge LF1. Im gespannten Zustand ist der Federspeicher als vorzugsweise zusammengedrückt. Wird die Spannfeder 156 gespannt, reduziert sich deren Länge, sodass sich die zwischen dem ersten Federspeicherende 152 und dem Federspeicherende 154 gemessene Federspeicherlänge von der ersten Federspeicherlänge LF1 zur zweiten Federspeicherlänge LF2 reduziert. Die Länge LE1 des hervorstehenden Endes 80 des ersten Seilabschnitts 52 nimmt zu und die Rückstelleinrichtung 112 verbringt die erste Bremseinheit 44 in die Fahrstellung.

Zum Freigeben der Sicherheitsbremse 142 bringt der Fahrer den ersten Sicherheitsgriff 144 mit dem zweiten Sicherheitsgriff 146 in Kontakt. Dadurch wird die Spannvorrichtung 148 gespannt und die Bremsvorrichtung 42 freigegeben. Gemäß diesem Ausführungsbeispiel sind der erste Sicherheitsgriff 144 und der zweite Sicherheitsgriff 146 mit einem Koppelelement 158 gekoppelt, das dazu ausgebildet ist, den Federspeicher150 zu spannen. Das Koppelelement 158 weist einen ersten Arm 160, der mit dem ersten Sicherheitsgriff 144 verbunden ist, und einen zweiten Arm 162 auf, der mit dem zweiten Sicherheitsgriff 146 verbunden ist. Der erste Arm 160 ist dabei gelenkig mit dem zweiten Arm 162 verbunden und kann um eine zweite Drehachse AD2 relativ zum zweiten Arm 162 verschwenkt werden. Hier sind der erste Arm 160 und der zweite Arm 162 scherenartig verbunden. In Figur 7 ist die von den Sicherheitsgriffen 144, 146 und den Armen 160, 162 definierte Schere in einer geöffneten Position dargestellt, wobei der erste Sicherheitsgriff 144 den zweiten Sicherheitsgriff 146 nicht kontaktiert. Der erste Sicherheitsgriff 144 und der zweite Sicherheitsgriff 146 sind bevorzugt zueinander beabstandet, wenn ein Sicherheitswinkel λ, gemessen zwischen dem ersten Arm 160 und dem zweiten Arm 162, einen Wert von größer 0° aufweist. Besonders bevorzugt sind der erste Sicherheitsgriff 144 und der zweite Sicherheitsgriff 146 zueinander beabstandet, wenn der Sicherheitswinkel λ einen Wert größer 1°, weiter bevorzugt größer 5°, ferner bevorzugt größer 10°, ferner bevorzugt größer 15°, besonders bevorzugt 20° oder größer aufweist. Durch einen Wert des Sicherheitswinkels λ von größer 1° kann vermieden werden, dass die Sicherheitsbremse 142 die erste Bremseinheit 44 in die Bremsstellung bringt, wenn der Fahrer den ersten Sicherheitsgriff 144 und den zweiten Sicherheitsgriff 146 mit lockerem Griff hält. Es soll verstanden werden, dass die Sicherheitsbremse 142 also bevorzugt nur bei Vorliegen eines Mindestabstands zwischen dem ersten Sicherheitsgriff 144 und dem zweiten Sicherheitsgriff 146 und/oder eines Mindestwerts des Sicherheitswinkels λ zwischen dem ersten Sicherheitsgriff 144 und dem zweiten Sicherheitsgriff 146 die erste Bremseinheit 44 in die Bremsstellung bringt. Es kann auch vorgesehen sein, dass der erste Sicherheitsgriff 144 und der erste Arm 160 und/oder der zweite Sicherheitsgriff 146 und der zweite Arm 162 einstückig ausgebildet sind. Bevorzugt kann der Sicherheitswinkel λ auch zwischen dem ersten Sicherheitsgriff 144 und dem zweiten Sicherheitsgriff 146 gebildet sein.

In dem in Figur 7 gezeigten Ausführungsbeispiel weist die Sicherheitsbremse 142 nur eine erste Spannvorrichtung 148 auf, welche die erste Bremseinheit 44 in die Bremsstellung bringt. Es kann bevorzugt auch vorgesehen sein, dass die Sicherheitsbremse 142 eine zweite Spannvorrichtung (nicht dargestellt) aufweist, welche dazu ausgebildet ist, die zweite Bremseinheit 46 in die Bremsstellung zu bringen, wenn der erste Sicherheitsgriff 144 und der zweite Sicherheitsgriff 146 beabstandet sind.

Ferner ist der erste Arm 160 an einem ersten Armende 166 mit einem Spannelement 164 der Sicherheitsbremse 142 verbunden. Durch das in Kontakt bringen der Sicherheitsgriffe 144, 146 wird der erste Arm 160 relativ zum zweiten Arm 162 gedreht und parallel zum zweiten Arm 162 ausgerichtet. Dadurch ändert sich eine Spannlänge LSP, gemessen zwischen dem ersten Armende 166 und einem Koppelelementende 168. Ferner ist das Koppelelement 164 an dem ersten Federspeicherende 152 fixiert und das Koppelelementende 168 starr mit dem zweiten Federspeicherende 154 verbunden. Werden die Sicherheitsgriffe 144, 146 in Kontakt gebracht, nimmt die Spannelementlänge LSP zu. Aufgrund der starren Verbindung zwischen dem Koppelementende 168 und dem zweiten Federspeicherende 154 bleibt eine Stützlänge LST konstant. In der Folge verringert sich die Länge des Federspeichers 150 von der ersten Federspeicherlänge LF1 zur zweiten Federspeicherlänge LF2 und die Sicherheitsbremse 142 wird freigegeben.

Die Sicherheitsbremse 142 kann zudem auch an der zweiten Umlenkung 68 angeordnet sein. Es soll verstanden werden, dass der Schlitten 2 auch durch den Fahrer gebremst werden kann, wenn die Sicherheitsbremse 142 freigegeben ist. Beispielsweise kann der Fahrer die Betätigungseinrichtung 48 inklusive der Sicherheitsbremse 142 zu sich heranziehen, um eine Länge LE1 des hervorstehenden Endes 80 des ersten Seilabschnitts 52 zu reduzieren und die erste Bremseinheit 44 in die Bremsstellung einzulegen. Dabei hebt der Federspeicher 150 von der ersten Umlenkung 64 ab. Lässt der Fahrer die Betätigungseinrichtung 48 los, wird die erste Bremseinheit 44 durch die Rückstelleinrichtung 112 zurückgestellt, wobei sich das erste Federspeicherende 152 der ersten Umlenkung 64 annähert. Zeitgleich lösen sich die Sicherheitsgriffe 144, 146 voneinander und die Spannelementlänge LSP nimmt ab. Dadurch wird die Spannfeder 156 entspannt und die Länge zwischen dem ersten Federspeicherende 152 und dem zweiten Federspeicherende 154 vergrößert sich bis zur zweiten Federspeicherlänge LF2. Da die Spannkraft der Spannfeder 156 größer ist als eine von der Rückstelleinrichtung 112 bereitgestellte Rückstellkraft, wird die erste Bremseinheit 44 in die Bremsstellung eingelegt.

Es soll verstanden werden, dass die Betätigungseinrichtung vorzugsweise auch als Umlenkgestänge ausgeführt sein kann (nicht dargestellt). Dabei kann sich ein erstes Gestänge in dem Frontabschnitt 12, vorzugsweise von einer Verlängerung 22, 24 zum Sitz 10, erstrecken. Die Umlenkung 62 ist dann vorzugsweise als Umlenkstange ausgebildet, wobei ein erstes Ende der Umlenkstange mit dem ersten Gestänge verbunden ist und ein zweites Ende der Umlenkstange mit einem Betätigungsgestänge verbunden ist. Das Betätigungsgestänge kann dann mit dem Betätigungshebel drehbar verbunden sein. Die Umlenkstange ist gemäß der Ausführungsform mit Umlenkgestänge bevorzugt an einer Verlängerung 22, 24 der Kufen 4, 6 oder an einer im Frontabschnitt 12 vorgesehenen Querstrebe drehbar gelagert.

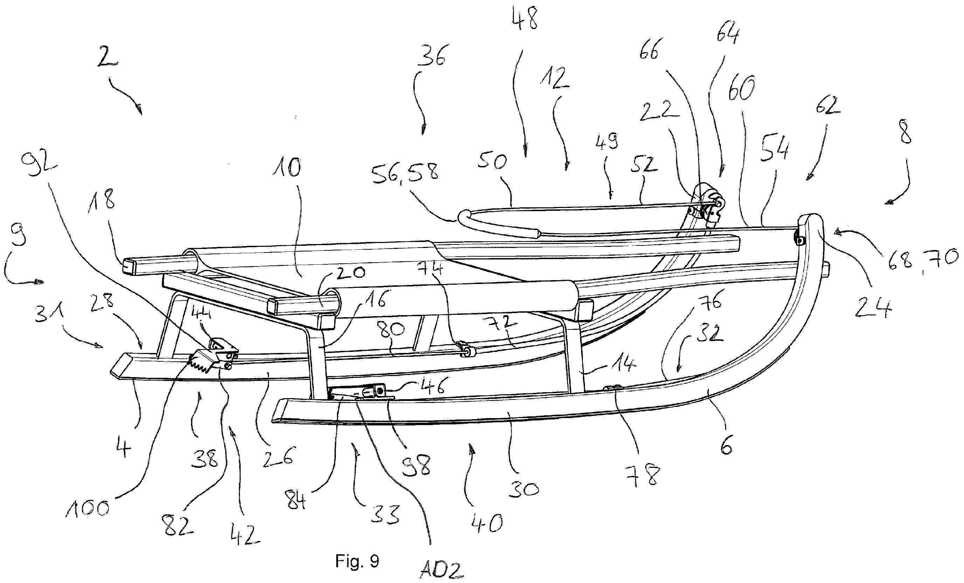

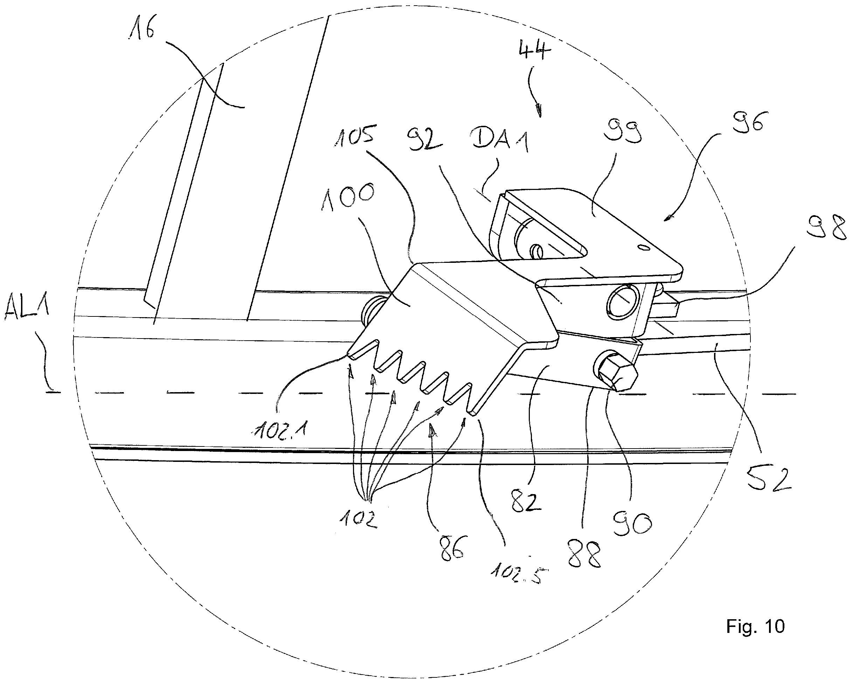

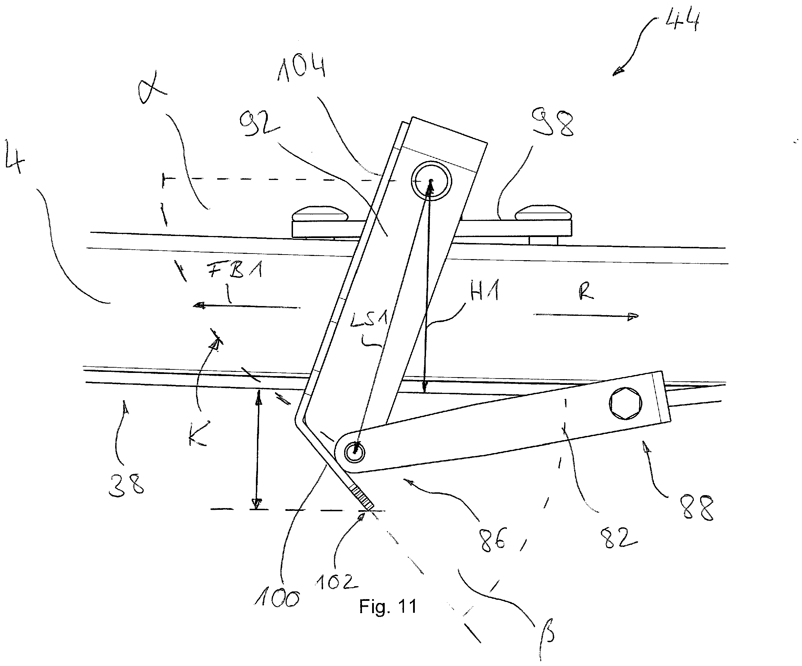

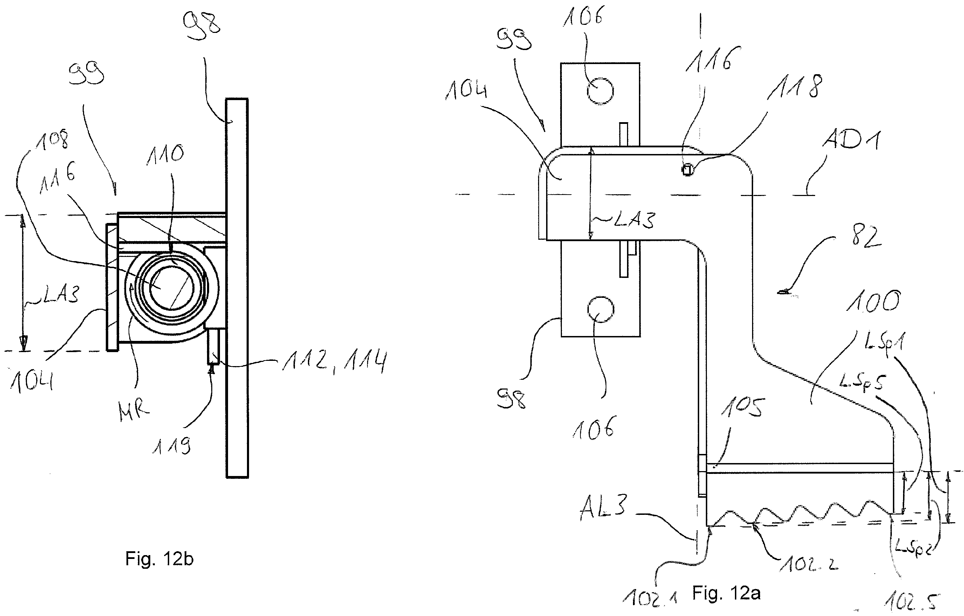

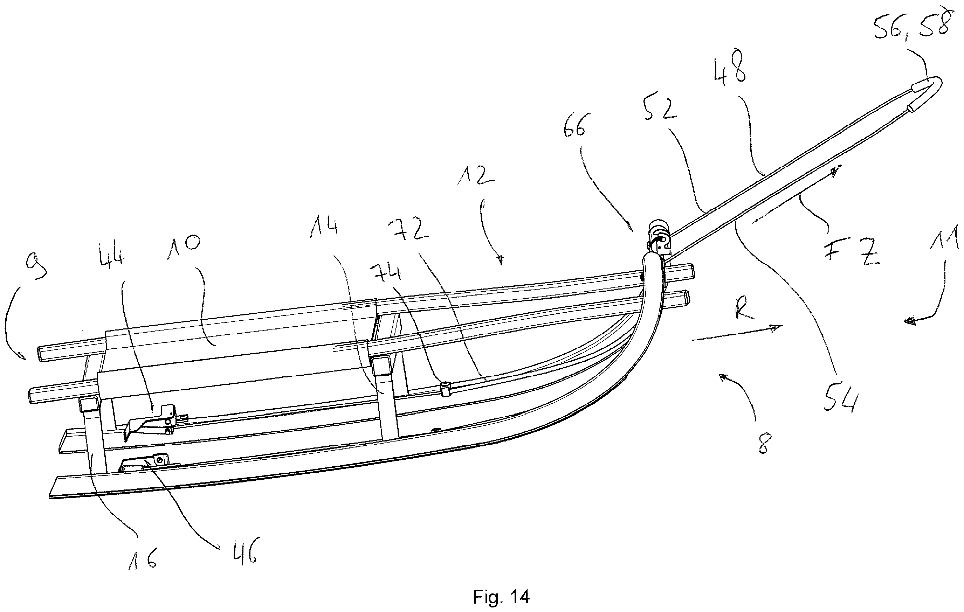

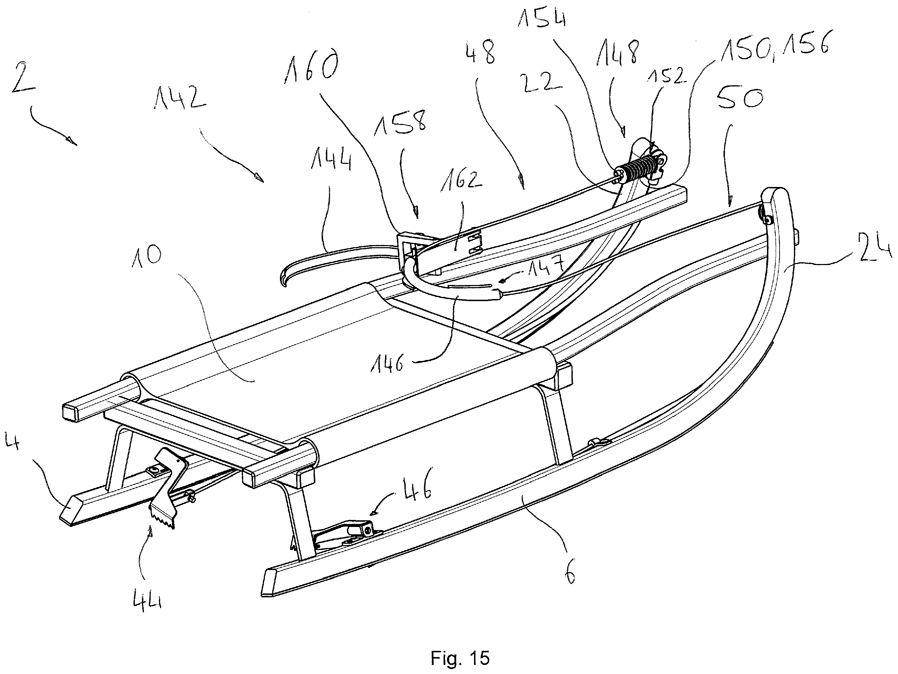

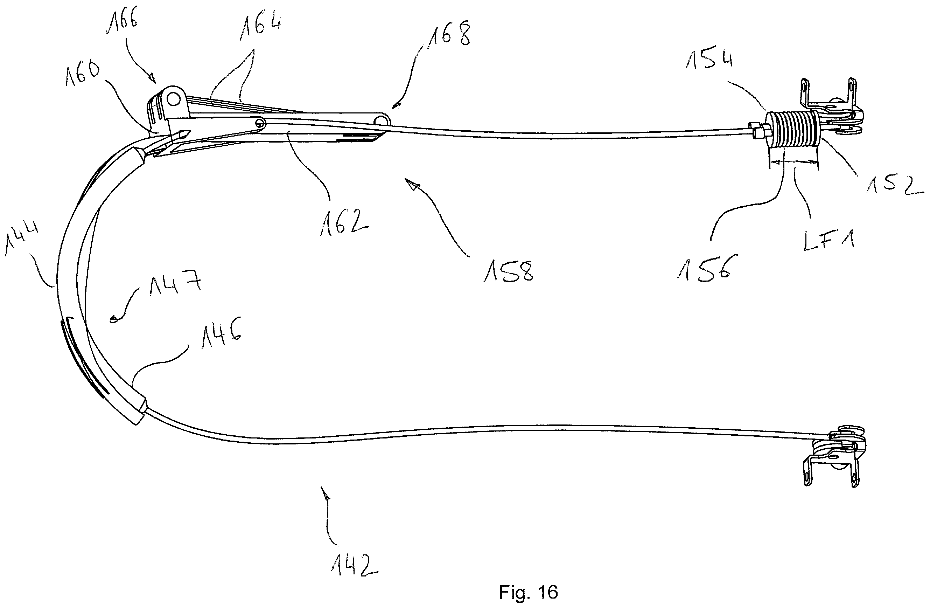

Die Figuren 9 bis 14 zeigen einen bremsbaren Schlitten gemäß einer dritten Ausführungsform und die Figuren 15 sowie 16 zeigen einen bremsbaren Schlitten gemäß einer vierten Ausführungsform, die vorzugsweise auch eine Weiterbildung der dritten Ausführungsform sein kann. Gleiche und ähnliche Merkmale des bremsbaren Schlittens gemäß der dritten Ausführungsform und gemäß der vierten Ausführungsform zu Merkmalen des bremsbaren Schlittens gemäß der ersten Ausführungsform und gemäß der zweiten Ausführungsform sind mit gleichen Bezugszeichen versehen und es wird vollumfänglich auf obenstehende Beschreibung zur ersten Ausführungsform und zur zweiten Ausführungsform Bezug genommen.

Der Schlitten 2 gemäß der dritten Ausführungsform und gemäß der vierten Ausführungsform ist im Vergleich zu den zuvor beschriebenen Ausführungsformen flach ausgebildet. Die erste Verlängerung 22 und die zweite Verlängerung 24 sind kürzer und Enden im Wesentlichen an der Front 8 des Schlittens. Die erste Längsstrebe 18 sowie die zweite Längsstrebe 20 sind indes verlängert. Der Sitz 10 des Schlittens 2 ist gemäß der dritten und vierten Ausführungsform als flexibler Textilsitz ausgebildet, der sich zwischen der ersten Längsstrebe 18 und der zweiten Längsstrebe 20 erstreckt.

Die erste Kufe 4 und die zweite Kufe 6 sind analog zum ersten und zweiten Ausführungsbeispiel nach innen geneigt, sodass sich die erste Hochachse AH1 (in Figuren 9 bis 16 nicht dargestellt) und die zweite Hochachse AH2 (in Figuren 9 bis 16 nicht dargestellt) schneiden. Die entsprechende Neigung der Kufen 4, 6 wird oftmals auch als Sturz bezeichnet. Der Sturz beschreibt einen Winkel zwischen der jeweiligen Hochachse AH1, AH2 der Kufe 4, 6 und einer Senkrechten auf der gleitfähigen Unterlage 34. Vorzugsweise hat der Sturz einen Wert in einem Bereich von 0° bis 35°, größer 0° bis 35°, 5° bis 30°, 10° bis 30°, 10° bis 25°, bevorzugt 15° bis 25°, besonders bevorzugt etwa 20°, wobei Grenzwerte der genannten Bereiche ebenfalls bevorzugt sind. In der dritten Ausführungsform und der vierten Ausführungsform hat der Sturz einen Wert von etwa 20°.

Die erste Bremseinheit 44 und die zweite Bremseinheit 46 weisen jeweils eine Kralle 100 (nur Kralle 100 der ersten Bremseinheit 44 dargestellt) zum Eingreifen in die gleitfähige Unterlage 34 auf. Die Bremseinheiten 44, 46 sind mittels Lagerplatten 98 an den Kufenoberseiten 28, 32 der Kufen 4,6 befestigt. Die Drehachsen AD1, AD2 der Bremseinheiten 44, 46 sind im Wesentlichen senkrecht zu den Hochachsen AH1, AH2 der Kufen 4, 6 ausgerichtet. Beim Betätigen der Betätigungseinrichtung 48 wird der erste Schwenkhebel 92 oder ein zweiter Schwenkhebel 93 der zweiten Bremseinheit 46 um die jeweiligen Drehachsen AD1, AD2 der Bremseinheiten 44, 46 verschwenkt, sodass Krallen 100 der betätigten Bremseinheit 44, 46 in die gleitfähige Unterlage 36 eingreifen. Aufgrund des Sturzes sind die Drehachsen AD1, AD2 nicht parallel zur gleitfähigen Unterlage 36.

Die Kralle 100 der ersten Bremseinheit 44 weist gemäß der dritten Ausführungsform und gemäß der vierten Ausführungsform mehrere Spitzen 102 auf. Diese sind vorzugsweise parallel zur Drehachse AD1 angeordnet. In diesem Ausführungsbeispiel weist die Kralle 100 insgesamt fünf Spitzen 102 auf, wobei auch Varianten mit 2, 3, 4, 6, 7, 8, 9 oder mehr Spitzen bevorzugt sind. Zum Ausgleichen des Sturzes weisen die Spitzen 102 unterschiedliche Spitzenlängen LSp auf. Gemäß der dritten Ausführungsform weist die Kralle 100 einen Knick 105 auf, sodass die Spitzen 102 nicht parallel zum Schwenkhebel 92 sind. Die Spitzenlänge LSp bestimmt sich senkrecht zur Drehachse AD1 des Schwenkhebels 92 zwischen dem Knick 105 und der jeweiligen Spitze 102. Es kann aber auch vorgesehen sein, dass die Spitzen 102 parallel zum Schwenkhebel 92 sind, sodass die Spitzenlänge LSp senkrecht zur Drehachse AD1 zwischen der Drehachse AD1 und der jeweiligen Spitze 102 gemessen wird. Eine Spitzenlänge LSp1 einer Kufenspitze 102.1 ist größer als eine Spitzenlänge LSp5 einer Mittenspitze 102.5. Die Kufenspitze 102.1 ist diejenige Spitze 102 der Kralle 100, die der ersten Kufe 4, an der die erste Bremseinheit 44 angeordnet ist, am nächsten liegt. Die Mittenspitze 102.5 weist den größten Abstand der Spitzen 102, gemessen entlang der Drehachse AD1, zur ersten Kufe 4 auf. Vorzugsweise nimmt die Spitzenlänge LSp der Spitzen 102 zur Mitte des Schlittens hin kontinuierlich ab. Eine Spitzenlänge LSp2 einer benachbart zur Kufenspitze 102.1 gelegenen Spitze 102.2 ist also vorzugsweise geringer als die Spitzenlänge LSp1 der Kufenspitze 102.1 aber größer als die Spitzenlänge LSp5 der Mittenspitze 102.5. Besonders bevorzugt ist die Spitzenlänge LSp der Spitzen 102 der Kralle 100 an den Sturz der Kufe 4 angepasst. Hierdurch kann sichergestellt werden, dass alle Spitzen 102 gleichzeitig mit der gleitfähigen Unterlage 36 in Eingriff kommen, wenn die Betätigungseinrichtung 48 betätigt wird. Der Sturz der ersten Kufe 4 kann so in vorteilhafter Weise ausgeglichen werden, wodurch ein besonders zuverlässiges und sicheres Bremsen ermöglicht wird. Vorzugsweise ist die Kralle der zweiten Bremseinheit 46 analog zur Kralle 100 der ersten Bremseinheit 44 ausgebildet.

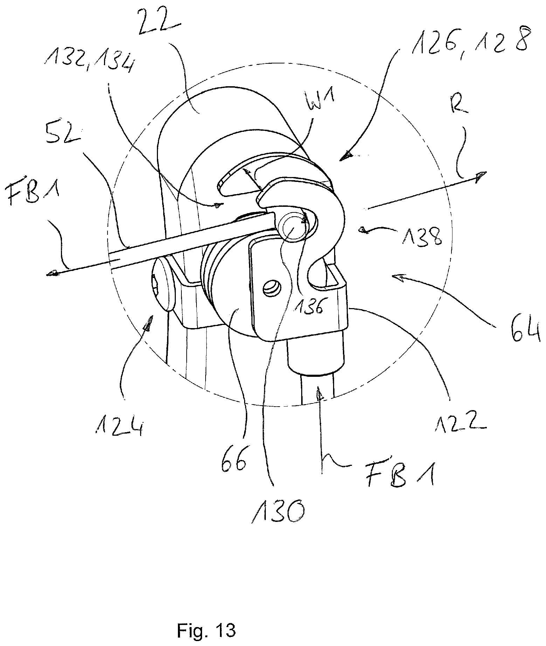

Gemäß der dritten Ausführungsform sind die Bohrungen 124 der ersten Umlenkung 64 im Wesentlichen in Fahrtrichtung R orientiert (Fig. 13). Das Umlenkgehäuse 122 umgreift die erste Kufe 4 abschnittsweise und ermöglicht ein einfaches und sicheres Befestigen der ersten Umlenkung 64 an der ersten Kufe 4.

## Patentansprüche

1. Bremsbarer Schlitten (2) mit einer Front (8) und einem Heck (9), aufweisend
eine erste Kufe (4) und eine zweite Kufe (6), wobei die erste Kufe (4) und die zweite Kufe (6) eine Fahrtrichtung (R) des Schlittens (2) vorgeben und zum Gleiten auf einer Unterlage (34), bevorzugt Schnee, ausgebildet sind,
einen Sitz (10) für zumindest einen Fahrer, der zwischen der Front (8) und dem Heck (9) angeordnet ist,
zumindest einen Rahmen (14, 16), der den Sitz (10) mit der ersten Kufe (4) und der zweiten Kufe (6) verbindet,
eine Bremsvorrichtung (42) zum Bremsen des Schlittens (2),
die eine erste Bremseinheit (44) und eine zweite Bremseinheit (46) aufweist, wobei die erste Bremseinheit (44) an der ersten Kufe (4) und die zweite Bremseinheit (46) an der zweiten Kufe (6) angeordnet ist,
eine Betätigungseinrichtung (48), die einen Griffabschnitt (56) aufweist und zum selektiven und unabhängigen Betätigen der ersten Bremseinheit (44) und der zweiten Bremseinheit (46) ausgebildet ist, wobei die erste Bremseinheit (44) und die zweite Bremseinheit (46) durch das Betätigen in eine Bremsstellung einlegbar sind, in der die erste Bremseinheit (44) und/oder die zweite Bremseinheit (46) mit der Unterlage (34) in Eingriff bringbar sind,
und wobei die Betätigungseinrichtung (48) zumindest abschnittsweise zwischen der Front (8) und dem Sitz (10) des Schlittens (2) angeordnet ist, sodass der Fahrer den Griffabschnitt (56) vor einer in Fahrtrichtung (R) weisenden Seite seines Oberkörpers greifen und zum selektiven und unabhängigen Betätigen der ersten Bremseinheit (44) und der zweiten Bremseinheit (46) zu sich heranziehen kann, und
eine Zugsicherung (126), die dazu ausgebildet ist, ein Einlegen der ersten Bremseinheit (44) und/oder ein Einlegen der zweiten Bremseinheit (46) zu verhindern, wenn die Betätigungseinrichtung (48) in einer Zugstellung ist, wobei der Griffabschnitt (56) in der Zugstellung auf einer distal zum Heck (9) angeordneten Seite der Front (8) angeordnet ist,
**dadurch gekennzeichnet, dass** die Betätigungseinrichtung (48) zumindest einen ersten Anschlag (130) aufweist, welcher dazu ausgebildet ist, mit einem korrespondierenden ersten Gegenstück (128) der Zugsicherung (126) zusammenzuwirken und das Einlegen der ersten Bremseinheit (44) und/oder zweiten Bremseinheit (46) zu verhindern, wenn die Betätigungseinrichtung (48) in der Zugstellung ist.

2. Bremsbarer Schlitten (2) nach Anspruch 1, wobei die Betätigungseinrichtung (48) zumindest ein Bremsseil (50) aufweist, wobei die erste Bremseinheit (44) und/oder die zweite Bremseinheit (46) durch Ziehen des Bremsseils (50) in die Bremsstellung einlegbar sind.

3. Bremsbarer Schlitten (2) nach Anspruch 2, wobei das Bremsseil (50) einen ersten Seilabschnitt (52) und einen zweiten Seilabschnitt (54) aufweist, wobei der erste Seilabschnitt (52) zum Einlegen der ersten Bremseinheit (44) in die Bremsstellung und der zweite Seilabschnitt (54) zum Einlegen der zweiten Bremseinheit (46) in die Bremsstellung vorgesehen ist, wobei der erste Seilabschnitt (52) und der zweite Seilabschnitt (54) unabhängig voneinander betätigbar sind und wobei der erste Seilabschnitt (52) und der zweite Seilabschnitt (54) vorzugsweise mittels des Griffabschnitts (56) verbunden sind.

4. Bremsbarer Schlitten (2) nach einem der vorstehenden Ansprüche, wobei die Betätigungseinrichtung (48) ferner eine Umlenkeinrichtung (62) aufweist, die in einem Frontbereich (12) des Schlittens (2) angeordnet ist, der sich zwischen der Front (8) und dem Sitz (10) erstreckt.

5. Bremsbarer Schlitten (2) nach Anspruch 4, wobei die Umlenkeinrichtung (62) eine erste Umlenkung (64) und eine zweite Umlenkung (68) aufweist, wobei die erste Umlenkung (64) an einer ersten Verlängerung (22) der ersten Kufe (4) angeordnet ist und die zweite Umlenkung (68) an einer zweiten Verlängerung (24) der zweiten Kufe (6) angeordnet ist.

6. Bremsbarer Schlitten (2) nach Anspruch 5, wobei der erste Seilabschnitt (52) zumindest abschnittsweise entlang der ersten Verlängerung (22) in einer ersten Hülle (72) aufgenommen ist und der zweite Seilabschnitt (54) zumindest abschnittsweise entlang der zweiten Verlängerung (24) in einer zweiten Hülle (76) aufgenommen ist, wobei die erste Hülle (72) und die zweite Hülle (76) entlang Ihrer Längsrichtungen druckfest sind.

7. Bremsbarer Schlitten (2) nach Anspruch 2, wobei der erste Anschlag (130) in das erste Gegenstück (128) eingreift und ein Ziehen des Bremsseils (50) verhindert, wenn die Betätigungseinrichtung (148) in der Zugstellung ist.

8. Bremsbarer Schlitten (2) nach einem der vorstehenden Ansprüche, wobei das erste Gegenstück (128) eine Öffnung (132) aufweist, die dazu ausgebildet ist, die Betätigungseinrichtung (48) aufzunehmen, wenn die Betätigungseinrichtung (48) in der Zugstellung ist, wobei der erste Anschlag (130) größer ist als eine lichte Weite (W1) der Öffnung (132).

9. Bremsbarer Schlitten (2) nach Anspruch 5, wobei die Betätigungseinrichtung (48) einen zweiten Anschlag (140) und die Zugsicherung (126) ein zweites Gegenstück (129) aufweist, wobei das erste Gegenstück (128) an der ersten Umlenkung (64) angeordnet ist und das zweite Gegenstück (129) an der zweiten Umlenkung (68) angeordnet ist.

10. Bremsbarer Schlitten (2) nach einem der vorstehenden Ansprüche, wobei die Betätigungseinrichtung (48) ferner eine Sicherheitsbremse (142) aufweist, welche die erste Bremseinheit (44) und/oder die zweite Bremseinheit (46) in die Bremsstellung vorspannt und dazu ausgebildet ist, in Antwort auf ein Betätigen der Sicherheitsbremse (142) durch den Fahrer die erste Bremseinheit (44) und/oder die zweite Bremseinheit (46) freizugeben.

11. Bremsbarer Schlitten (2) nach Anspruch 10, wobei die Sicherheitsbremse (142) einen Federspeicher (150), einen ersten Sicherheitsgriff (144) und einen zweiten Sicherheitsgriff (146) aufweist, wobei der Federspeicher (150) die Betätigungseinrichtung (48) zum Einlegen der ersten Bremseinheit (44) und/oder zweiten Bremseinheit (46) betätigt, wenn der erste Sicherheitsgriff (144) und der zweite Sicherheitsgriff (146) in einem Sicherheitsbremszustand sind, indem der erste Sicherheitsgriff (144) und der zweite Sicherheitsgriff (146) zueinander beabstandet sind.

12. Bremsbarer Schlitten (2) nach einem der vorstehenden Ansprüche, wobei die erste Bremseinheit (44) einen ersten Klappmechanismus mit einem ersten Schwenkhebel (92) und einem ersten Betätigungshebel (82) aufweist, wobei der erste Betätigungshebel (82) an einem ersten Ende (86) drehbar mit einem zweiten Ende (94) des ersten Schwenkhebels (92) verbunden ist und wobei ein zweites Ende (88) des ersten Betätigungshebels (82) mit der Betätigungseinrichtung (48) verbunden ist,
und/oder wobei die zweite Bremseinheit (46) einen zweiten Klappmechanismus mit einem zweiten Schwenkhebel (93) und einem zweiten Betätigungshebel (84) aufweist, wobei der zweite Betätigungshebel (84) an einem ersten Ende (87) drehbar mit einem zweiten Ende (95) des zweiten Schwenkhebels (93) verbunden ist und wobei ein zweites Ende (89) des zweiten Betätigungshebels (84) mit der Betätigungseinrichtung (48) verbunden ist.

13. Bremsbarer Schlitten (2) nach Anspruch 12, wobei die erste Bremseinheit (44) eine erste Kralle (100) aufweist, die zum Eingreifen in die Unterlage (34) über das zweite Ende (94) des ersten Schwenkhebels (92) hervorstehend ausgebildet ist,
und/oder wobei die zweite Bremseinheit (46) eine zweite Kralle (101) aufweist, die zum Eingreifen in die Unterlage (34) über das zweite Ende des zweiten Schwenkhebels (93) hervorstehend ausgebildet ist.

14. Bremsbarer Schlitten (2) nach Anspruch 13, wobei die erste Kralle (100) und/oder die zweite Kralle (102) in einer initialen Bremsstellung im Wesentlichen senkrecht zu einer Auflageebene des Schlittens (2) ist, die durch die erste Kufe (4) und die zweite Kufe (6) des Schlittens (2) definiert wird, wobei eine Spitze (102) der ersten Kralle (100) und/oder eine Spitze (103) der zweiten Kralle (101) in der initialen Bremsstellung die Auflageebene kontaktiert.

## Claims

1. A brakeable sled (2) having a front (8) and a rear (9), comprising
a first runner (4) and a second runner (6), the first runner (4) and the second runner (6) defining a direction of travel (R) of the sled (2) and being configured to slide on a base (34), preferably snow,
a seat (10) for at least one driver disposed between the front (8) and the rear (9),
at least one frame (14, 16) for connecting the seat (10) to the first runner (4) and the second runner (6),
a braking device (42) for braking the sled (2),
having a first brake unit (44) and a second brake unit (46), the first brake unit (44) being disposed on the first runner (4) and the second brake unit (46) being disposed on the second runner (6),
an actuating device (48) having a handle section (56) and being configured to selectively and independently actuate the first brake unit (44) and the second brake unit (46), the first brake unit (44) and the second brake unit (46) being able to be engaged in a braking position by the actuation, in which the first brake unit (44) and/or the second brake unit (46) can be brought into engagement with the base (34),
and the actuating device (48) being disposed at least in sections between the front (8) and the seat (10) of the sled (2), so that the driver can grasp the handle section (56) in front of a side of the upper body facing in the direction of travel (R) and pull said handle towards the driver for selectively and independently actuating the first brake unit (44) and the second brake unit (46), and
a pulling lockout (126) configured to prevent engagement of the first brake unit (44) and/or engagement of the second brake unit (46) when the actuating device (48) is in a pulling position, the handle section (56) being disposed in the pulling position on a side of the front (8) disposed distally to the rear (9),
**characterised in that** the actuating device (48) comprises at least one first stop (130) configured to interact with a corresponding first counterpart (128) of the pulling lockout (126) and to prevent engagement of the first brake unit (44) and/or second brake unit (46) when the actuating device (48) is in the pulling position.

2. The brakeable sled (2) according to claim 1, wherein the actuating device (48) has at least one brake cable (50), wherein the first brake unit (44) and/or the second brake unit (46) can be engaged in the braking position by pulling the brake cable (50).

3. The brakeable sled (2) according to claim 2, wherein the brake cable (50) has a first cable section (52) and a second cable section (54), wherein the first cable section (52) is provided for engaging the first brake unit (44) in the braking position and the second cable section (54) is provided for engaging the second brake unit (46) in the braking position, wherein the first cable section (52) and the second cable section (54) can be actuated independently of one another and wherein the first cable section (52) and the second cable section (54) are preferably connected by means of the handle section (56).

4. The brakeable sled (2) according to any one of the preceding claims, wherein the actuating means (48) further comprises a deflecting means (62) disposed in a front region (12) of the sled (2) extending between the front (8) and the seat (10).

5. The brakeable sled (2) according to claim 4, wherein the deflection device (62) has a first deflection (64) and a second deflection (68), wherein the first deflection (64) is disposed on a first extension (22) of the first runner (4) and the second deflection (68) is disposed on a second extension (24) of the second runner (6).

6. The brakeable sled (2) according to claim 5, wherein the first cable section (52) is received at least in sections along the first extension (22) in a first sheath (72) and the second cable section (54) is received at least in sections along the second extension (24) in a second sheath (76), wherein the first sheath (72) and the second sheath (76) are pressure-resistant along their longitudinal directions.

7. The brakeable sled (2) according to claim 2, wherein the first stop (130) engages in the first counterpart (128) and prevents the brake cable (50) from being pulled when the actuating device (148) is in the pulling position.

8. The brakeable sled (2) according to any one of the preceding claims, wherein the first counterpart (128) has an opening (132) configured to receive the actuating device (48) when the actuating device (48) is in the pulling position, wherein the first stop (130) is larger than a clear width (W1) of the opening (132).

9. The brakeable sled (2) according to claim 5, wherein the actuating device (48) has a second stop (140) and the pulling lockout (126) has a second counterpart (129), wherein the first counterpart (128) is disposed on the first deflection (64) and the second counterpart (129) is disposed on the second deflection (68).

10. The brakeable sled (2) according to any one of the preceding claims, wherein the actuating device (48) further comprises a safety brake (142) for pretensioning the first brake unit (44) and/or the second brake unit (46) into the braking position and is configured to release the first brake unit (44) and/or the second brake unit (46) in response to an actuation of the safety brake (142) by the driver.

11. The brakeable sled (2) according to claim 10, wherein the safety brake (142) comprises a spring accumulator (150), a first safety handle (144), and a second safety handle (146), wherein the spring accumulator (150) actuates the actuating means (48) for engaging the first brake unit (44) and/or second brake unit (46) when the first safety handle (144) and the second safety handle (146) are in a safety braking state, in that the first safety handle (144) and the second safety handle (146) are spaced apart from each other.

12. The brakeable sled (2) according to any one of the preceding claims, wherein the first brake unit (44) comprises a first folding mechanism having a first pivot lever (92) and a first actuating lever (82), wherein the first actuating lever (82) is rotatably connected at a first end (86) to a second end (94) of the first pivot lever (92) and wherein a second end (88) of the first actuating lever (82) is connected to the actuating device (48),
and/or wherein the second brake unit (46) comprises a second folding mechanism having a second pivot lever (93) and a second actuating lever (84), wherein the second actuating lever (84) is rotatably connected at a first end (87) to a second end (95) of the second pivot lever (93) and wherein a second end (89) of the second actuating lever (84) is connected to the actuating device (48).

13. The brakeable sled (2) according to claim 12, wherein the first brake unit (44) has a first claw (100) configured to protrude over the second end (94) of the first pivot lever (92) for engaging in the base (34),
and/or wherein the second brake unit (46) has a second claw (101) configured to protrude beyond the second end of the second pivot lever (93) in order to engage in the base (34).

14. The brakeable sled (2) according to claim 13, wherein the first claw (100) and/or the second claw (102) in an initial braking position is substantially perpendicular to a contact plane of the sled (2) defined by the first runner (4) and the second runner (6) of the sled (2), wherein a tip (102) of the first claw (100) and/or a tip (103) of the second claw (101) contacts the contact plane in the initial braking position.

## Revendications

1. Traîneau freinable (2) ayant un avant (8) et un arrière (9), possédant
un premier patin (4) et un deuxième patin (6), le premier patin (4) et le deuxième patin (6) définissant une direction de déplacement (R) du traîneau (2) et étant configurés pour glisser sur un support (34), de préférence de la neige,
un siège (10) pour au moins un conducteur, qui est disposé entre l'avant (8) et l'arrière (9),
au moins un cadre (14, 16) qui relie le siège (10) au premier patin (4) et au deuxième patin (6),
un dispositif de freinage (42) destiné à freiner le traîneau (2),
qui possède une première unité de freinage (44) et une deuxième unité de freinage (46), la première unité de freinage (44) étant disposée au niveau du premier patin (4) et la deuxième unité de freinage (46) étant disposée au niveau du deuxième patin (6),
un dispositif d'actionnement (48) qui possède une portion formant poignée (56) et qui est configuré pour l'actionnement sélectif et indépendant de la première unité de freinage (44) et de la deuxième unité de freinage (46), la première unité de freinage (44) et la deuxième unité de freinage (46) pouvant être placées, par l'actionnement, dans une position de freinage dans laquelle la première unité de freinage (44) et/ou la deuxième unité de freinage (46) peuvent/peut être mises en prise avec le support (34),
et le dispositif d'actionnement (48) étant disposé au moins par portions entre l'avant (8) et le siège (10) du traîneau (2), de sorte que le conducteur peut saisir la portion formant poignée (56) devant un côté de son torse orienté dans la direction de déplacement (R) et tirer celle-ci vers lui pour actionner sélectivement et indépendamment la première unité de freinage (44) et la deuxième unité de freinage (46), et
un élément de sécurisation de traction (126), qui est configuré pour empêcher un engagement de la première unité de freinage (44) et/ou un engagement de la deuxième unité de freinage (46) lorsque le dispositif d'actionnement (48) se trouve dans une position de traction, la portion formant poignée (56), en position de traction, étant disposée sur un côté de l'avant (8) distal par rapport à l'arrière (9),
**caractérisé en ce que** le dispositif d'actionnement (48) possède au moins une première butée (130), laquelle est configurée pour coopérer avec une première pièce complémentaire (128) correspondante de l'élément de sécurisation de traction (126) et pour empêcher l'engagement de la première unité de freinage (44) et/ou de la deuxième unité de freinage (46) lorsque le dispositif d'actionnement (48) se trouve dans la position de traction.

2. Traîneau freinable (2) selon la revendication 1, le dispositif d'actionnement (48) possédant au moins un câble de frein (50), la première unité de freinage (44) et/ou la deuxième unité de freinage (46) pouvant être engagée(s) dans la position de freinage en tirant sur le câble de frein (50).

3. Traîneau freinable (2) selon la revendication 2, le câble de frein (50) possédant une première portion de câble (52) et une deuxième portion de câble (54), la première portion de câble (52) étant prévue pour engager la première unité de freinage (44) dans la position de freinage et la deuxième portion de câble (54) étant prévue pour engager la deuxième unité de freinage (46) dans la position de freinage, la première portion de câble (52) et la deuxième portion de câble (54) pouvant être actionnées indépendamment l'une de l'autre et la première portion de câble (52) et la deuxième portion de câble (54) étant reliées de préférence au moyen de la portion formant poignée (56).

4. Traîneau freinable (2) selon l'une des revendications précédentes, le dispositif d'actionnement (48) possédant en outre un dispositif de renvoi (62) qui est disposé dans une zone frontale (12) du traîneau (2), qui s'étend entre l'avant (8) et le siège (10).

5. Traîneau freinable (2) selon la revendication 4, le dispositif de renvoi (62) possédant un premier renvoi (64) et un deuxième renvoi (68), le premier renvoi (64) étant disposé sur un premier prolongement (22) du premier patin (4) et le deuxième renvoi (68) étant disposé sur un deuxième prolongement (24) du deuxième patin (6).

6. Traîneau freinable (2) selon la revendication 5, la première portion de câble (52) étant logée au moins par portions dans une première gaine (72) le long du premier prolongement (22) et la deuxième portion de câble (54) étant logée au moins par portions dans une deuxième gaine (76) le long du deuxième prolongement (24), la première gaine (72) et la deuxième gaine (76) étant résistantes à la pression le long de leurs directions longitudinales.

7. Traîneau freinable (2) selon la revendication 2, la première butée (130) venant en prise dans la première pièce complémentaire (128) et empêchant une traction du câble de frein (50) lorsque le dispositif d'actionnement (148) se trouve en position de traction.

8. Traîneau freinable (2) selon l'une des revendications précédentes, la première pièce complémentaire (128) possédant une ouverture (132) qui est configurée pour recevoir le dispositif d'actionnement (48) lorsque le dispositif d'actionnement (48) se trouve en position de traction, la première butée (130) étant plus grande qu'une largeur intérieure (W1) de l'ouverture (132).

9. Traîneau freinable (2) selon la revendication 5, le dispositif d'actionnement (48) possédant une deuxième butée (140) et l'élément de sécurisation de traction (126) possédant une deuxième pièce complémentaire (129), la première pièce complémentaire (128) étant disposée au niveau du premier renvoi (64) et la deuxième pièce complémentaire (129) étant disposée au niveau du deuxième renvoi (68).

10. Traîneau freinable (2) selon l'une des revendications précédentes, le dispositif d'actionnement (48) possédant en outre un frein de sécurité (142), lequel précontraint la première unité de freinage (44) et/ou la deuxième unité de freinage (46) dans la position de freinage et est configuré pour libérer la première unité de freinage (44) et/ou la deuxième unité de freinage (46) en réponse à un actionnement du frein de sécurité (142) par le conducteur.

11. Traîneau freinable (2) selon la revendication 10, le frein de sécurité (142) possédant un accumulateur à ressort (150), une première poignée de sécurité (144) et une deuxième poignée de sécurité (146), l'accumulateur à ressort (150) actionnant le dispositif d'actionnement (48) pour engager la première unité de freinage (44) et/ou la deuxième unité de freinage (46) lorsque la première poignée de sécurité (144) et la deuxième poignée de sécurité (146) se trouvent dans un état de freinage de sécurité, en ce que la première poignée de sécurité (144) et la deuxième poignée de sécurité (146) sont espacées l'une de l'autre.

12. Traîneau freinable (2) selon l'une des revendications précédentes, la première unité de freinage (44) possédant un premier mécanisme de basculement pourvu d'un premier levier pivotant (92) et d'un premier levier d'actionnement (82), le premier levier d'actionnement (82) étant relié de manière rotative, au niveau d'une première extrémité (86), à une deuxième extrémité (94) du premier levier pivotant (92), et une deuxième extrémité (88) du premier levier d'actionnement (82) étant reliée au dispositif d'actionnement (48),
et/ou la deuxième unité de freinage (46) possédant un deuxième mécanisme de basculement pourvu d'un deuxième levier pivotant (93) et d'un deuxième levier d'actionnement (84), le deuxième levier d'actionnement (84) étant relié de manière rotative, au niveau d'une première extrémité (87), à une deuxième extrémité (95) du deuxième levier pivotant (93) et une deuxième extrémité (89) du deuxième levier d'actionnement (84) étant reliée au dispositif d'actionnement (48).

13. Traîneau freinable (2) selon la revendication 12, la première unité de freinage (44) possédant une première griffe (100) qui est configurée saillante au-delà de la deuxième extrémité (94) du premier levier pivotant (92) afin de venir en prise avec le support (34), et/ou la deuxième unité de freinage (46) possédant une deuxième griffe (101) qui est configurée saillante au-delà de la deuxième extrémité du deuxième levier pivotant (93) afin de venir en prise avec le support (34).

14. Traîneau freinable (2) selon la revendication 13, la première griffe (100) et/ou la deuxième griffe (102), dans une position de freinage initiale, étant sensiblement perpendiculaire(s) à un plan d'appui du traîneau (2), qui est défini par le premier patin (4) et le deuxième patin (6) du traîneau (2), une pointe (102) de la première griffe (100) et/ou une pointe (103) de la deuxième griffe (101) étant en contact avec le plan d'appui dans la position de freinage initiale.
